# EUROPÄISCHE PATENTSCHRIFT

(11) **EP 0 335 208 B1**
(45) Veröffentlichungstag und Bekanntmachung des Hinweises auf die Patenterteilung: **01.09.1993**
(21) Anmeldenummer: 89104856.3
(22) Anmeldetag: 17.03.1989
(51) Int. Cl.: B60R 13/04

(54) **Kunststoff-Bauelement**
Plastic structural member
Profilé en matière plastique

(30) Priorität: 19.03.1988 DE 3809344; 01.07.1988 DE 3822399
(43) Veröffentlichungstag der Anmeldung: 04.10.1989
(73) Patentinhaber: Trier, Lothar, D-96247 Michelau (DE)
(72) Erfinder: Trier, Lothar, D-96247 Michelau (DE)
(74) Vertreter: Prechtel, Jörg, Dipl.-Phys. Dr.

(56) Entgegenhaltungen:
- EP-A- 0 084 629
- EP-A- 0 108 879
- EP-A- 0 118 397
- DE-A- 2 043 272
- DE-A- 3 415 379
- DE-A- 3 544 217
- DE-U- 8 811 467
- FR-A- 2 076 314
- US-A- 4 161 853

## Beschreibung

Die Erfindung richtet sich auf ein Kunststoff-Bauelement nach dem Oberbegriff des Anspruchs 1.

Ein solches Bauelement findet beispielsweise als Seitenschutzleiste, auch als Stoßfänger, vorzugsweise an Stirn und Heck von Kraftfahrzeugkarosserien, Verwendung. Es kommt aber auch überall dort in Frage, wo eine Karosserie oder ein Geräte- oder Apparategehäuse einer ggf. zum Schutz oder auch aus ästhetischen Gründen vorgesehenen Verkleidung oder der Abdichtung zweier aneinander angrenzender Gehäuseteile bedarf. Der Begriff Bauelement ist hier im weitesten Sinne des Wortes zu verstehen. Es kann sich durchaus um ein langes, etwa leistenförmig schmales Konstruktionsteil handeln, aber auch um ein solches von gedrungener Bauart und geringerer Länge. Diese Bauteile dienen aber auch, vornehmlich im Fahrzeugbau, konstruktiven Zwecken, indem sie als Verstärkungselemente auf besonders großflächigen Karosserieteilen Verwendung finden.

Die heute gebräuchlichen sogenannten Stoßleisten bestehen vielfach aus einer Einlage aus nichtrostendem Stahlblech, auf welches, nach aufwendiger Vorbehandlung, ein gesondert, im allgemeinen durch Extrudieren hergestelltes ein- oder mehrteiliges Kunststoffprofil aufgeklebt wird. Eine solche Konstruktion ist zunächst durch ihr hohes Gewicht nachteilig, andererseits aber auch durch das hochwertige Blech teuer. Dies gilt ebenfalls für eine andere Ausführungsform, bei der auf das Blech aus nichtrostendem Stahl ein Kunststoffbelag aufextrudiert wird. Die Stoßleisten gehen verlaufend in die sie tragende Fläche des Karosserieteils über. Solche Partien können nicht im Wege des Extrudierens hergestellt werden, sondern werden im allgemeinen als Spritzgießteile gesondert gefertigt und in einem eigenen Arbeitsgang an der Stoßleiste angebracht. Bei einer bevorzugt angewendeten Arbeitsweise werden nacheinander die Enden der durch Extrudieren vorgefertigten aus dem Blechprofil und deren Kunststoffauflage bestehenden Leisten in eine Spritzgießform eingelegt und das Endteil stoffschlüssig angespritzt. Diese Maßnahme berücksichtigt nicht nur die Verbindung beider Teile der Stoßleiste, sondern auch die infolge der Anpassung an die Karosserie vielfach recht komplizierte Formgebung solcher Endpartien Allerding wirkt die deutlich sichtbare Ansatznaht zwischen dem vorgefertigten Leistenkörper und der angespritzten Endpartie störend.

Verkleidungsteile sind im Gebrauch außerordentlich hohen Temperaturschwankungen ausgesetzt, und zwar nicht nur bei Kraftfahrzeugen, sondern auch bei Gerätegehäusen, die vielfach erhebliche Wärme erzeugende Aggregate enthalten. Der Kunststoff unterliegt einer beträchtlichen Wärmedehnung, die nur bei Einschluß versteifender Armierungselemente aus Metall in derartige Bauteile aufgefangen werden kann. Will man beispielsweise aus Gründen der Gewichts- und/oder Kostenersparnis auf versteifende Metallarmierungen verzichten, bietet sich die Möglichkeit der Verwendung von mineralfaserarmierten Kunststoffen an oder aber der Einsatz von vornehmlich mineralischen Zugschlagsstoffen zu dem Kunststoff. Dadurch wird dieser allerdings spröde und büßt ein beachtliches Maß seiner stoßdämpfenden Wirkung ein. Eine Faserarmierung führt ebenso zu einer unansehnlichen Oberfläche wie, wenn auch in geringem Maße, die Verwendung von mineralischen Zuschlagsstoffen.

Eine weiteres Problem ergibt sich bei der Anwendung vergleichsweise harter oder mit Zuschlagsstoffen versehener Kunststoffe durch die Anlage derartiger Bauteile an lackierten Flächen, sofern ein dichter Abschluß zwischen den Längsrändern des Bauelements und der Karosserie gefordert wird. Hierbei treten nicht nur mechanische Beschädigungen der empfindlichen Lackflächen auf, sondern auch störende Geräusche, die insbesondere bei der auf eine hohe Perfektion bedachten Kfz-Fertigung nicht hingenommen werden können. Die Verwendung weniger harter Kunststoffe setzt die Einbettung von Metallblecharmierungen voraus, was wiederum diesem Problem nicht abhilft und andererseits keine dichte Anlage der Stege an der Karosserie gewährleistet.

Derartige der Verkleidung, Verzierung, dem Schutz oder der Abdichtung von Gehäusen oder Karosserien dienende Bauteile erweisen sich mithin als höchst problembehaftete Konstruktionsteile, die in mehrerlei Hinsicht verbesserungsbedürftig erscheinen, zum einen, um ihre Herstellung zu vereinfachen und damit Kosten zu senken, zum anderen, um die Fertigung und Montage zu rationalisieren und schließlich auch ihre Wirkungsweise zu verbessern, insbesondere das Gewicht zu senken und die Funktion bei denjenigen Anwendungsfällen zu verbessern, bei denen der Schonung der diese Bauteile tragenden Flächen besondere Bedeutung zukommt.

Das aus der EP-A-84629 (Fig. 1) bekannte Kunststoff-Bauelement der eingangs genannten Art ist mit einer einzigen Armierungsleiste versehen, die sich praktisch über die gesamte Innenseite des Bauelementkörpers erstreckt und die faserverstärkt ist, um die thermische Ausdehnung des Bauelements gegenüber dem sie tragenden Karosserieblech klein zu halten. Für die Herstellung sind eine Vielzahl von möglichen Verfahren angegeben. Über die Gestaltung der Enden des mit dem Träger einen Hohlraum bildenden Bauelements ist nichts ausgesagt. Bei der u.a. vorgeschlagenen Koextrusion von Armierungsleiste und Bauelementkörper jedenfalls sind beide Enden offen und müssen ggf. durch gesonderte Abschlußstücke oder durch anschließendes Anspritzen von Endstücken geschlossen werden. Als selbsttragendes Bauelement kann es in einfacher Weise, z.B. durch Andrücken an die Karosserie zur Herstellung einer Klebeverbindung oder Klipsverbindung, am Träger montiert werden.

Aufgrund der von Steg zu Steg durchgehenden Armierungsleiste ergibt sich das Problem, daß bei einem Stoß auf das bekannte Bauteil im Bereich der größten Erhebung, nämlich im Bereich des Bauelementkörpers zwischen den Stegen, dieser Stoß über die aufgrund der Armierungsleiste nur wenig nachgiebige Schiene unmittelbar auf das Karosserieblech übertragen wird mit entsprechender Blechverformung. Ferner ist die Öffnung des Profils an beiden Bauelementenden bzw. der sichtbare Übergang zwischen extrudiertem Bauelementkörper und gesondert angespritztem Endstück aus ästhetischen Gründen nachteilig.

Der Erfindung liegt die Aufgabe zugrunde, ein selbsttragendes Kunststoff-Bauelement der eingangs genannten Art mit reduzierter thermischer Ausdehnung im Befestigungsbereich am Träger bereitzustellen, welches bei angenehmem Äußeren und einfacher Herstellbarkeit für eine wirksame Stoßaufnahme möglichst ohne Verformung des Trägers sorgt.

Diese Aufgabe wird durch die Merkmale des Anspruchs 1 gelöst. Da die Armierungsleisten als Randarmierungen ausgebildet sind, kann das Kunststoff-Bauelement im dazwischenliegenden Bereich mit lichtem Abstand zum Träger ohne weiteres elastisch und/oder plastisch nachgiebig ausgebildet sein, so daß Stoßbelastungen vom Kunststoff-Bauelement aufgefangen werden können, ohne Verformung des darunterliegenden Trägers. Die Randarmierung vermeidet unterschiedliche thermische Ausdehnungen von Kunststoff-Bauelement und Träger in dem kritischen Verbindungsbereich. Die bei nicht armierten Kunststoff-Bauelementen bei höheren Temperaturen praktisch unvermeidlichen mehr oder weniger starken Randwellungen werden zuverlässig vermieden. Die Maßhaltigkeit des erfindungsgemäßen Bauelements ist erhöht, da die Randarmierung den Formschwund sowie auch die Altersschrumpfung entscheidend reduziert Aufgrund des gleichzeitigen Anspritzens des Bauelementkörpers sowie des wenigstens einen Endstücks an die Armierungsleisten erhält man das Kunststoff-Bauelement in einem einzigen Arbeitsgang das Kunststoff-Bauelement ohne störende Übergangsnaht. Das Endstück kann in seiner Form an den jeweiligen Verwendungszweck angepaßt werden, z.B. flach auslaufend am scharnierseitigen Ende einer Seitenschutzleiste an einer Kraftfahrzeugtüre.

Die EP-A-108879 zeigt in den Fig. 6 - 8 einen Leistenkörper mit Endstück. Der Leistenkörper kann sowohl durch Strangpressen wie auch Spritzen oder durch Blasformen gebildet sein und kann angespritzte, angeklebte oder sonstwie daran befestigte Endstücke tragen. Die Übergangslinie zwischen Leistenkörper und Endstück am fertigen Bauelement ist dann jedoch deutlich sichtbar, was insbesondere bei den an exponierter Stelle angebrachten Kraftfahrzeug-Leisten aus ästhetischen Gründen ziemlich störend ist. Der Leistenkörper ist nicht armiert. Eine umlaufende Dichtlippe ist vorgesehen, jedoch in Form eines gesonderten elastischen Rahmens, welcher über die bereits montierte Leiste stülpbar ist.

Die DE-A-3544217 Zeigt zwar einen im Querschnitt im wesentlichen U-förmigen Bauelementkörper mit am Träger über Randbereiche anliegenden Seitenschenkel. Da bei diesem Stand der Technik jedoch nicht die beiden Seitenschenkel, sondern der Mittelschenkel der U-Form der Anbringung am Träger dient, werden auf die Leiste ausgeübte Stöße über den Mittelschenkel und dessen Befestigungsvorrichtung am Träger auf den Träger unmittelbar weitergeleitet. Auch ist keinerlei Armierung vorgesehen.

Die FR-A-2076314 befaßt sich mit einem Trägerprofil für eine Dichtlippe oder dergleichen, wobei in einem Kombinationsspritzkopf als erstes ein Trägerprofilkörper auf eine gleichfalls U-förmige Metallarmierung aufgespritzt wird und anschließend der weichelastische Dichtungskunststoff. Eine Stoßaufnahmefähigkeit ist aufgrund des von Längsrand zu Längsrand durchgehenden Verstärkungsprofils nicht gegeben.

Das DE-U-87 06 438 befaßt sich mit einer Stoßleiste mit schräg nach außen geneigten, dichtlippenartigen Randbereichen und schräg nach innen aufeinander zulaufenden Stegen des Leistenkörpers mit einer von Steg zu Steg reichenden Armierungsleiste. Bei dieser bekannten Konstruktion sind keine Maßnahmen getroffen, um die unterschiedliche thermische Ausdehnung der Randbereiche im Vergleich zum Karosserieblech zu reduzieren. Auch ist aufgrund der einen durchgehenden Armierungsleiste nur eine relativ geringfügige Stoßaufnahmefähigkeit bei zentralen Stößen gewährleistet.

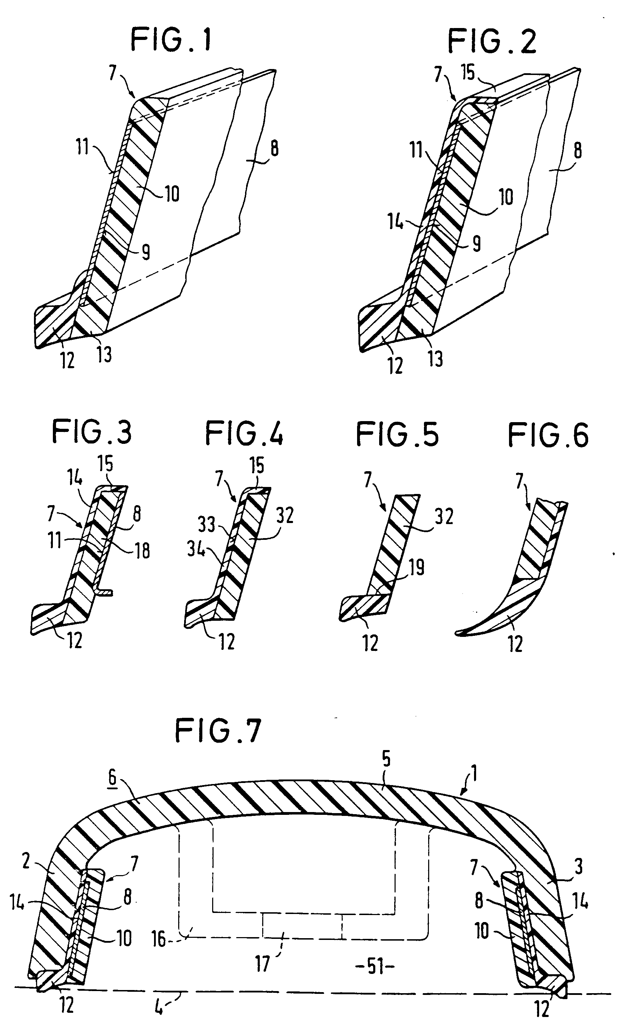

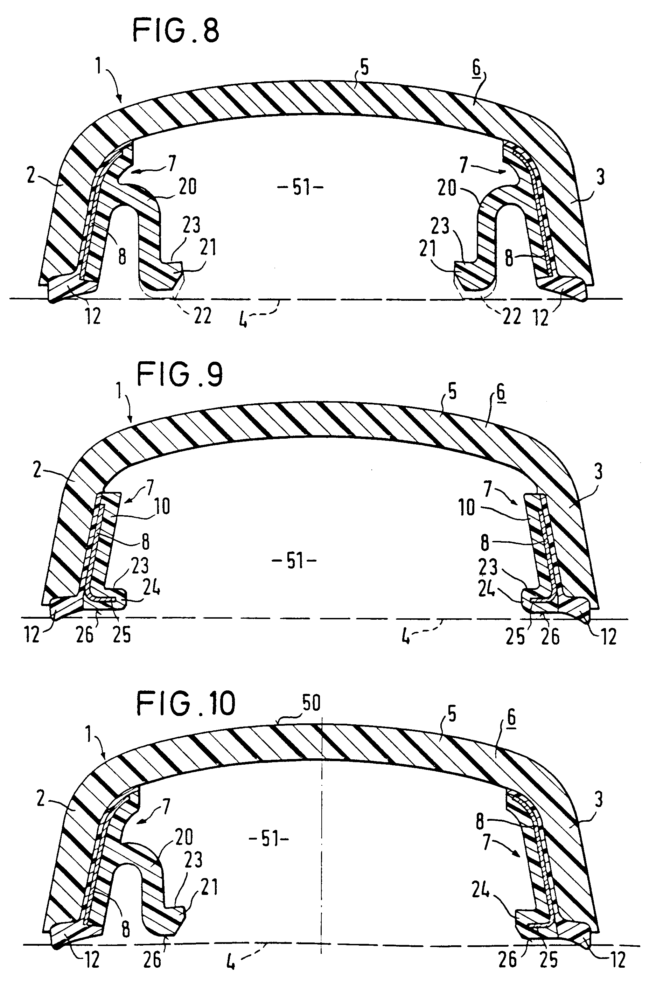

Die DE-U-69 50 343 befaßt sich mit einer hohlen Profilschiene mit trapezförmigem Querschnitt. Die Befestigungsmittel greifen in Breitenmitte der Bodenwand des Hohlkörpers an. Gemäß den Fig. 3 und 4 kann diese Bodenwand mit einer angenähert ebenen, über die gesamte Bodenwand durchgehenden Armierungsschiene versehen sein, die in den Grundkörper eingesetzt oder eingespritzt sein kann. Weitere Metallschienen können in die Seitenwände des Hohlprofils eingesetzt sein, für die eine Gitterstruktur empfohlen wird, um eine Wellenbildung beim Erwärmen der Profilschiene zu verhindern. Gemäß Fig. 9 ist ein gesondertes, stopfenartiges Endstück in ein Profilende eingesetzt. Schließlich können die am Karosserieblech anliegenden Längsränder des Profils gemäß Fig. 2 mit in den Leistenkörper eingesetzten Profilleisten versehen sein aus weichem Werkstoff, um eine gute Dichtwirkung zu erzielen. Aufgrund der kastenartigen Hohlprofilform ergibt sich im Vergleich zur gattungsgemäßen Querschnittsform ein deutlich größerer Materialeinsatz, was bei dem Massenprodukt Stoßleiste aus Gründen der Herstellungskosten unerwünscht ist, und auch das Leistengewicht erhöht und damit den Kraftstoffverbrauch beim Betrieb des Fahrzeugs. Die Stoßaufnahmefähigkeit ist im Vergleich zur gattungsgemäßen Querschnittsform von vorneherein reduziert, da die Bodenwand den möglichen Einfederweg reduziert. Der erfindungsgemäße Gedanke, die Leiste im Verbindungsbereich mit dem Träger (also im Randbereich der Stege) zu armieren, jedoch den dazwischenliegenden Bereich der U-Profilform armierungsfrei zu halten, ist dieser Druckschrift keinesfalls zu entnehmen; erst recht nicht der Gedanke, den Leistenkörper gleichzeitig mit den Endstücken an die Armierungsleisten anzuspritzen, um störend sichtbare Übergangslinien zu vermeiden.

Die DE-A-29 30 850 zeigt in Fig. 1 eine Schutzleiste mit im wesentlichen ebenem Leistenkörper, die über eine an ihr aufgeklebten Halteschiene auf ein karosseriefestes Befestigungsteil aufrastbar ist. Eine in den Fig. 2 - 4 gezeigte Rammleiste aus Vollmaterial ist an ihrer Unterseite mit einer sich im wesentlichen über die gesamte Unterseite erstreckenden Armierungsleiste versehen.

Die DE-A-21 36 108 zeigt eine Zierleiste mit C-förmigem Querschnitt zur Aufrastung auf einen karosseriefesten Grundkörper.

Aus der DE-A-20 43 272 ist ein Kunststoff-Bauelement zur elastisch nachgiebigen Überbrückung der einzelnen Glieder von Schienen- oder Straßengliederzügen bekannt, bei welchem der Bauelementkörper von einer Gummiplatte gebildet ist, die im Querschnitt U-förmig gewölbt ist, wobei die Seitenschenkel der U-Form (Stege) in entsprechende Nuten je eines Befestigungswinkels einvulkanisiert sind. Die Befestigungswinkel sind Spritzgußteile und müssen gesondert mit dem jeweiligen Zugglied verschraubt werden, wodurch das an sich nicht formstabile (nicht selbsttragende) Kunststoff-Bauelement seine gewünschte Form erhält. Bei Anwendungsarten, bei welchen es auf möglichst einfache Montage bei weitgehender Schonung der Trägeroberfläche ankommt, z.B. im Falle von Leisten an Kraftfahrzeug-Karosserien, ist die bekannte Anordnung ungeeignet. Bei linearer Anordnung des aus der DE-A-20 43 272 bekannten Gummiwulstes ergibt sich das Problem, daß beide Axialenden offen sind.

Aus der DE-A-34 15 379 ist ein Kunststoff-Bauelement bekannt mit einer Armierungsleiste in Form einer zum Träger hin offenen zentralen Metallschiene mit C-Profil mit minimal dünner Weich-PVC-Kunststoffschicht, hergestellt im Extrusionsverfahren. Diese Leiste wird in eine Spritzgießform eingelegt und mit einem Bauelementkörper aus Kunststoff umspritzt in Form zweier, von der Metallschiene seitlich abstehender, gewölbter Flügel. Die Flügelränder liegen am Träger (Karosserieblech) an. Die Befestigung dieses Kunststoff-Bauelements am Träger erfolgt offenbar über in das C-Profil eingreifende Befestigungselemente. Die axialen Enden des bekannten leistenförmigen Kunststoff-Bauelements sind offenbar offen. Aufgrund der Metallschiene wird zwar erreicht, daß im Befestigungsbereich angenähert gleiche thermische Längenänderungen von Träger und Kunststoff-Bauelement stattfinden. Dies gilt jedoch nicht für die von der Armierung entfernten lippenartigen Ränder des Bauelement-Körpers, so daß in dem bei Kraftfahrzeugkarosserien beträchtlichen Temperaturbereich deutlich unterschiedliche thermische Längenänderungen stattfinden. Dies schließt eine genaue Formanpassung des Kunststoffbauelement-Randes an den Träger aus. Es kann zu Lackbeschädigungen kommen; störende Vibrationen des Kunststoff-Bauelements können auftreten. Es kann zu wellenartigen Verwerfungen der Ränder kommmen. Es wurde festgestellt, daß bei einer Leiste mit Ausgangslänge 1 m, die mit einer Aluminiumband-Armierung versehen war, die Längenänderung im Bereich der Armierung bei einer Temperaturerhöhung von Raumtemperatur auf 100°C im Bereich von 1,8 mm lag, der davon 70 mm entfernte, nicht armierte Rand der Leiste sich jedoch um 4 mm verlängert hat, also um mehr als 2 mm im Vergleich zur Armierung (und zum Karosserieblech). Ferner ist es bei Einsatz dieses bekannten Kunststoff-Bauelements zum Schutz der Karosserie (beispielsweise als Seitenschutzleiste oder als Stoßfänger) von besonderem Nachteil, daß bei einem Stoß auf das Bauteil im Bereich der größten Erhebung, nämlich im Bereich der C-Profilschiene, dieser Stoß über die nur wenig nachgiebige Schiene unmittelbar auf das Karosserieblech übertragen wird mit entsprechender Blechverformung.

In einer bevorzugten Ausführungsform der Erfindung sind beide Armierungsleisten an der Innenseite des Bauelementkörpers angeordnet, so daß die Armierungsleisten von außen her nicht sichtbar sind. Da der Bauelementkörper samt Endstücken an die Armierungsleisten angespritzt ist, ergibt sich somit ein rundum geschlossenes Kunststoff-Bauelement. Der auf diese Weise völlig einheitliche Bauelementkörper ist bis an den Träger heruntergezogen, was wiederum für ein angenehmes Aussehen beiträgt.

Um den Innenraum des Bauelements nach außen hin abzuschließen, insbesondere um das Eindringen von Feuchtigkeit zu vermeiden, kann wenigstens einer Stege oder wenigstens eine der Armierungsleisten mit einer am Träger anliegenden weichelastischen Auflageschicht ausgebildet sein. Besonders bevorzugt ist hierbei vorgesehen, daß der wenigstens eine Steg oder die wenigstens eine Armierungsleiste im Bereich des Steges mit einer am Träger anliegenden Dichtlippe ausgebildet ist.

Die erfindungsgemäße Ausbildung dieses Bauteils bedient sich zu der vor allem die Formbeständigkeit des Bauteils gewährleistenden Armierung der Verstärkung an denjenigen Bereichen, die dem Gehäuse, der Karosserie oder dergl. anliegen, wobei es gleichgültig ist, ob diese Armierung des Bauteils aus einem Metallblech oder Metallprofil oder faserverstärktem Kunststoff besteht. Diese letztere kann beispielsweise Glasfasern oder Kohlenstoffasern zur Armierung enthalten. In jedem Fall ist aber die Armierungsleiste ein zunächst selbständiges Bauteil, welches erst nachträglich stoffschlüssig mit dem Bauelement zu dem Kunststoff-Bauelement vereinigt wird, und zwar an den Stellen, an denen die Armierung die größtmögliche Wirkung für die Formbeständigkeit und Stabilität des Bauteils erzielt. Das Armierungsteil kann mit einer integrierten Randlippe oder dergl. aus weichelastischem Werkstoff versehen werden kann, die sich nach der Vereinigung von Armierungsleiste und Kunststoffkörper an den Anlageflächen des Steges des Bauteils befindet. In Abkehr von dem zum Stand der Technik gehörenden vergleichbaren Bauteilen weist das erfindungsgemäße Konstruktionsteil eine integrierte weichelastische Anlage- und/oder Dichtungslippe an denjenigen Kanten auf, an denen das Bauteil der Karosserie oder anderen zu verkleidenden Flächen anliegt, wodurch nicht nur eine zuverlässige, ggf. auch dichte Anlage erzielt wird, sondern darüberhinaus auch ein wirksamer Schutz der im allgemeinen besonders empfindlichen Anlagefläche. Im Gegensatz zu bisher bekannt gewordenen Dichtungslippen, die formschlüssig am Rand von Verkleidungsleisten angeklemmt oder auch an diesem Rand angeklebt werden, weist das erfindungsgemäße Bauteil eine in dieses stoffschlüssig integrierte weichelastische Lippe auf, die dem Bauteil weit bessere Gebrauchseigenschaften verleiht.

Es entspricht dem Grundgedanken der Erfindung, die Armierungsleisten durch Extrudieren, aber auch ggf. durch Spritzen, herzustellen und den Kunststoffkörper an die Armierungsleisten anzuspritzen. Die Extrusionstechnik gestattet in besonders einfacher Weise die Herstellung der Armierungsleisten, insbesondere aus zwei oder mehreren Stoffen von beispielsweise unterschiedlicher Härte. So kann die Beschichtung des überwiegenden Teils der Armierungsleiste, wenn diese nicht aus faserverstärktem Kunststoff besteht, aus einem vergleichsweise harten Kunststoff bestehen, während der die Armierungsleiste überragende und den Anlagerand des Bauteils bildende Teil der Armierungsleiste weichelastisch ist und in hervorragender Weise die Anlagefunktion an dem zu verkleidenden Bauteil erfüllt. Die am Einlageteil vorgesehene Dichtlippe kann bereits bei der Herstellung im Extrusionsverfahren mit angeformt werden. Diese Art der Herstellung ist wesentlich günstiger als beispielsweise das Anspritzen einer Dichtlippe an den aus relativ hartem Kunststoff bestehenden Bauelementkörper in Spritzgußtechnik - ein bei diesem Anspritzen erforderlicher, über die gesamte Bauteillänge sich erstreckender Schieber erübrigt sich beim Extrusionsverfahren.

Der Bauelementkörper selbst wird hingegen nicht extrudiert, vielmehr im Wege der Spritztechnik erzeugt, wobei die vorgefertigten Armierungsleisten in ihrer vorbestimmten unveränderbaren Position in die Spritzgießform eingebracht werden. Beim Spritzvorgang ergibt sich eine stoffschlüssige Verbindung zwischen den beiden Kunststoffen. Eine formschlüssige Verbindung zweier Kunststoffe setzt selbstverständlich deren stoffliche Eignung hierzu voraus.

Die Metallarmierung der Armierungsleisten ist vorteilhaft zumindest an der im Bauteil nach innen gerichteten Fläche beschichtet. An diese Beschichtung kann dann auch die weichelastische Lippe angeformt sein. Eine andere Alternative sieht vor, daß die Metallarmierung an der im Bauteil nach außen gerichteten Fläche zumindest im unteren Anlagebereich mit dem weichelastischen Werkstoff beschichtet ist. Die Metallarmierung kann aber auch an ihrer innen liegenden Fläche unbeschichtet sein. Selbstverständlich kann die Beschichtung mit diesem Werkstoff auch die gesamte Außenfläche der Metallarmierung erfassen. Weist die Armierungsleiste keine Metallarmierung auf, besteht sie also aus einem vorzugsweise mit Glasfaser oder Kohlenstoffaser armierten Kunststoff oder besteht sie aus einem harten Kunststoff ohne jegliche zusätzliche Armierung, so ist an sich eine Beschichtung entbehrlich. Es muß lediglich die dem Gehäuse oder dergl. anliegende Lippe aus weichelastischem Kunststoff im Anlagebereich angebracht sein. Zweckmäßig ist es hierbei, eine solche Armierungsleiste wenigstens einseitig, an der Außenseite oder an der Innenseite, mit einem weichelastischen Kunststoff zu beschichten, der zweckmäßig an seinem unteren Ende auch die weichelastische Lippe ausbildet.

Es liegt im Rahmen der Erfindung, an der Innenseite der Armierungsleisten in den Innenhohlraum des Bauteils ragende und zur Abstützung des Bauteils dienende Elemente anzuformen, deren Anlagefläche aus weichelastischem Werkstoff besteht. Diesem Merkmal kommt insbesondere dann Bedeutung zu, wenn es sich um ein Bauteil größerer Breite handelt, welches zwischen seinen äußeren Stegen noch einer zusätzlichen Abstützung bedarf. Analog zu diesem Merkmal sieht die Erfindung vor, daß an der Innenseite der Armierungsleisten in den Innenhohlraum des Bauteils ragende zur Befestigung des Bauteils dienende Elemente angeformt sind, wie Noppen, Schenkel oder dergl., die aus dem harten Beschichtungswerkstoff bestehen. Solche Befestigungselemente sind an sich bekannt; sie dienen nicht nur der räumlichen Fixierung des Bauteils gegenüber der Karosserie oder dem sonstigen Gehäuseteil, sondern insbesondere auch dazu, das Bauteil fest an die Fläche anzuziehen. Dem steht bei einem Bauteil der erfindungsgemäßen Art deshalb nichts im Wege, weil dieses an seinen Anlagekanten mit weichelastischen Lippen versehen ist. Zweckmäßig sind diese Befestigungselemente ebenfalls mit einer Armierung aus Metall oder einer Mineralfaser versehen.

Als besonders vorteilhaft hat es sich erwiesen, die Anordnung so zu treffen, daß die außenseitige Beschichtung der Armierungsleiste zumindest teilweise bis zu der Außenfläche des Kunststoffkörpers reicht. Damit eröffnet die Erfindung ein zweckmäßiges weites Anwendungsfeld, indem nämlich durch unterschiedliche Werkstoffwahl eine besonders ästhetische Gestaltung eines solchen Bauteils erzielt werden kann. In weiterer Ausgestaltung dieses Erfindungsgedankens kann wenigstens eine der Armierungsleisten im Bereich der Außenseite des Kunststoff-Bauelements mit anderer Farbgebung und/oder Oberflächenprofilierung ausgebildet sein, als der sich anschließende Bauelementkörper. Dies führt im einfachsten Fall zu einer attraktiven Zierleiste, die einstückig in das Bauteil integriert ist und zu ihrer Anbringung keines zusätzlichen Arbeitsganges bedarf. Natürlich können auch mehrere abweichend eingefärbte Zierleisten nebeneinander angeordnet sein.

Besonders vorteilhaft kann es sein, daß die außenliegende Fläche der Armierungsleiste eine metallisch wirkende Oberfläche erhält.

Im allgemeinen wird die Metallarmierung einen sich in die Kontur des Bauteils integrierenden Querschnitt aufweisen. Sie verläuft dann im wesentlichen parallel zu den Anlageflächen des Bauteils selbst dann, wenn sie über dessen beide Anlagestege hinausgeführt ist und mehr oder weniger weit in die Krümmung zu dem anschließenden außenliegenden Brückenbereich des Bauteils übergeht. Es ist jedoch auch denkbar, der Metallarmierung einen von der Kontur des Bauteils abweichenden Querschnitt zu geben, wenn dies aus konstruktiven Gründen erforderlich sein sollte.

Da das erfindungsgemäße Bauteil vielfach nicht nur auf völlig ebenen Flächen zur Anwendung gelangt, sondern auch auf in einer oder mehreren Richtungen gekrümmten Flächen, sieht die Erfindung in ihrer weiteren Ausgestaltung vor, daß die Metallarmierung und/oder die an der Innenseite der Armierungsleiste angeordneten Schenkel ein Biegen des Bauteils ermöglichende Ausstanzungen aufweist.

Für die Anwendung der Erfindung auf Bauteile von größerer Breite, wie sie insbesondere im Karosseriebau Verwendung finden, können weitere Armierungsleisten vorgesehen sein, die diagonal oder x-förmig über der Innenseite des die beiden Seitenschenkel verbindenden Mittelschenkels des Bauelementkörpers von dem einen Steg zu dem anderen Steg geführt sind.

Schließlich liegt es im Rahmen der Erfindung, daß weitere Armierungsleisten innerhalb des Mittelschenkels in im wesentlichen parallelen Verlauf zu den Stegen des Bauteils stoffschlüssig angeformt sind. Auch diese Bauform kommt insbesondere bei Bauteilen in Betracht, deren Länge im umgekehrten Verhältnis zu ihrer Breite steht. Es handelt sich hierbei vornehmlich um plattenförmige Bauteile größerer Breite, die aber ebenfalls zum Verkleiden oder Verzieren oder zum Schutz oder auch zum Abdichten von Gehäusen, Karosserien oder dergl. Verwendung finden.

Im Zusammenhang mit der Erfindung wird unter Spritzgußtechnik ganz allgemein eine Gußtechnik unter Verwendung von Gußformen verstanden, darunter beispielsweise die sogenannte RIM-Technik (Reaction-Injektion-Moulding). Hierbei werden Kunststoffgemische, vorzugsweise Polyurethan, in die Form kalt eingebracht, welche in der Form zu Feststoff, im allgemeinen mit Schaumausbildung, ausreagieren.

Das Kunststoff-Bauelement kann im Bereich zweier einander gegenüberliegender Umfangsrandabschnitte unmittelbar am Träger befestigt sein (verklipsen oder verkleben); es ist jedoch auch möglich, eine am Träger insbesondere anklebbare Befestigungsplatte einzusetzen, an welcher das Kunststoff-Bauelement anbringbar, insbesondere anklipsbar ist.

Das Einlageteil kann weiterhin mit Befestigungsvorsprüngen und/oder Befestigungsausnehmungen ausgebildet sein, an welche Befestigungselemente zur Anbringung des Kunststoff-Bauelements am Träger angreifen.

Um größere Spannweiten des Kunststoff-Bauelements zu ermöglichen, kann vorgesehen sein, daß wenigstens eines der Einlageteile in einen mittleren Bereich des Kunststoff-Bauelements mit Abstand zu den Umfangsrandabschnitten angeordnet ist. Dieses Einlageteil kann als bloße Längsverstärkung des Kunststoff-Bauelements mit Abstand zum Träger angeordnet sein, so daß die Stoßaufnahme-Funktion überhaupt nicht behindert ist. Das Einlageteil kann jedoch auch als Stützsteg ausgebildet sein, mit welchem sich der mittlere Bereich des Kunststoff-Bauelements am Träger abstützt und welcher in Stützrichtung nachgiebig ausgebildet ist, vorzugsweise über eine Auflage aus weichelastischem Kunststoff. Aufgrund der Nachgiebigkeit in Stützrichtung ergibt sich weiterhin eine gewisse Stoßaufnahmefähigkeit im Bereich des Stützstegs.

Im Bereich des Umfangsrandes kann eine zum Umfangsrand parallele, nach außen offene Nut vorgesehen sein, welche vorzugsweise zwischen dem Träger und dem vom Einlageteil in Abstand zum Träger gehaltenen Bauelementkörper gebildet ist. Diese Nut kann zur Aufnahme eines Lackierschutzmantelrandes dienen; sie kann auch dem Ausgleich von Herstellungs-Maßabweichungen der Oberflächenform des Trägers dienen. Schließlich ist auch dann ein gewisser Abstand zwischen Bauelement-Körper und Träger erforderlich, wenn eine Verklebung des Kunststoff-Bauelements mit dem Träger erfolgt. Würde sich der Umfangsrand des Bauelement-Körpers unter Federvorspannung am Träger abstützen, so würde dies mit der Zeit zu einer Lockerung der Verklebung führen.

Schließlich kann auch anstelle der erwähnten Klebeverbindung (zwischen Einlageteil und Träger) auch eine Verbindung über gesonderte Befestigungselemente vorgesehen sein, welche an wenigstens eines der Einlageteile angreifen, vorzugsweise über eine Rastverbindung.

Da die Einlageteile an beiden einander gegenüberliegenden Längsrändern des Kunststoff-Bauelements für die erforderliche Formstabilität sorgen, kann der Bauelement-Körper selbst mit Weichkunststoff (d.h. unter Verwendung von Weichkunststoff) gebildet sein. Dies eröffnet auch die Möglichkeit, daß die Befestigungselemente zur Anbringung des Kunststoff-Bauelements am Träger dem Bauelement-Körper eine vorgegebene Form aufprägen, vorzugsweise mit sich entlang einer vorgegebenen Richtung, insbesondere der Längsrichtung des länglichen Kunststoff-Bauelements, ändernder Querschnittsform. Auf diese Weise ist es möglich, den mit konstantem Querschnitt (bis auf die Endstücke) in der Spritzgußform hergestellten, relativ weichen Bauelement-Körper durch entsprechende gegenseitige Anordnung der an einander gegenüberliegenden Längsrändern angreifenden Befestigungselemente dem Bauelement-Körper beispielsweise eine sich in einer Richtung verjüngende Form aufzuprägen.

Man könnte hierzu die Befestigungselemente jeweils gesondert in entsprechendem Abstand am Träger festlegen; die Montage vereinfacht sich jedoch, wenn die an den beiden einander gegenüberliegenden Längsrändern vorgesehenen Befestigungselemente an einer gemeinsamen Befestigungsplatte vorgesehen sind, die wiederum am Träger anbringbar ist (durch Verklebung oder Verklipsung oder dergl.).

Weitere Merkmale, Einzelheiten und Vorteile der Erfindung ergeben sich aus der folgenden Beschreibung einiger bevorzugter Ausführungsformen der Erfindung anhand der Zeichnung. Hierbei zeigen:
- Fig. 1: eine Armierungsleiste in perspektivischer, abgebrochener Darstellung;
- Fig. 2 bis 5: verschiedene abgewandelte Ausführungsformen dieser Armierungsleiste.
- Fig. 6: ein Detail einer Armierungsleiste;
- Fig. 7 bis 11: mehrere Ausführungsformen eines Bauteils der gleichen Gattung, sämtlich im Schnitt;
- Fig.12: eine spezielle Ausführungsform, ebenfalls im Querschnitt;
- Fig.13: ein abgewandeltes Detail der Ausführungsform nach Fig. 12;
- Fig. 13A: eine stark vereinfachte, abgebrochene, teilweise geschnittene Seitenansicht eines erfindungsgemäßen Bauteils;
- Fig. 14 und 15: zwei weitere Abwandlungen des Bauteils im Schnitt;
- Fig. 16: ein plattenförmiges Bauteil, schematisch in Draufsicht;
- Fig. 17: eine Abwandlung dieser Ausführungsform;
- Fig. 18: einen Schnitt etwa nach Linie XVIII-XVIII in Fig. 17;
- Fig. 19: einen Schnitt durch eine weitere Ausführungsform des Bauteils,
- Fig. 20: eine weitere Ausführungsform, ebenfalls im Schnitt;
- Fig. 21 bis 23: verschiedene Ausbildungen für Armierungsleisten im Schnitt;
- Fig. 24: eine Abwicklung des gewölbten Kunststoff-Bauelements mit trapezartigem Außenumriß;
- Fig. 25: eine abweichende Ausbildung ähnlich Fig. 7 mit rechteckigem Umriß;
- Fig. 26: eine perspektivische Darstellung der Ausführungsformen gemäß Fig. 6 und 7 in Gebrauchsstellung;
- Fig. 27 bis 29: Schnittansichten weiterer Ausführungsformen.

Die Figuren der Zeichnung beziehen sich mehrheitlich rein beispielsweise auf ein Kunststoff-Bauelement, wie es als Seitenleiste an Kraftfahrzeugkarosserien Verwendung findet. Es liegt auf der Hand, daß die gleichen Konstruktionsprinzipien auch bei analogen Bauteilen angewendet werden können, die für andere Verwendungszwecke in Betracht kommen, sei es beispielsweise als Stoßfänger an Kraftfahrzeugen oder aber als entsprechende Leisten an Gehäusen für Maschinen oder Geräte.

Die für ein Kraftfahrzeug bestimmte Seitenleiste, im nachfolgenden mit Bauteil 1 bezeichnet, liegt mit ihren beiden Stegen 2 und 3 auf einer lediglich gestrichelt wiedergegebenen Karosserie- oder Gehäusefläche 4 auf. Beide Stege 2 oder 3 werden durch ein brückenartiges Teil 5 zu einer Einheit verbunden. Diese bildet in Verbindung mit den beiden Stegen 2, 3 einen einheitlichen Kunststoffkörper 6 aus vergleichsweise hartem Kunststoff, insbesondere einem Polyäthylen, Polypropylen oder dergl. Dieses Bauteil 1 ist im Bereich ihrer Stege 2, 3 armiert, und zwar durch vergleichsweise schmale Armierungs Leisten 7, von denen mehrere unterschiedliche Ausführungsformen in den Fig. 1 bis 6 wiedergegeben sind. Sie enthalten eine Metallarmierung 8 in Form eines Blechstreifens aus nichtrostendem Stahl oder Aluminium. Diese Metallarmierung 8 ist, selbstverständlich nach entsprechender Vorbehandlung, bei diesen Ausführungsformen übereinstimmend an der Innenseite 9 mit einer Beschichtung 10 aus vergleichsweise hartem Kunststoff versehen. Bei der Ausführungsform nach Fig. 1 ist die Außenfläche 11 der Metallarmierung 8 unbeschichtet. Lediglich an ihrem unteren Ende ist eine Lippe 12 aus weichelastischem Werkstoff, beispielsweise einem Kunststoff angeformt, der mit dem unteren Ende 13 der rückseitigen Beschichtung 10 eine stoffschlüssige Verbindung eingeht. Bei der Ausführungsform nach Fig. 2 hingegen erstreckt sich über die gesamte Außenfläche 11 der streifenförmigen Metallarmierung 8 eine Beschichtung 14 aus dem gleichen weichelastischen Kunststoff, aus dem auch die Lippe 12 am unteren Ende besteht. Am oberen Ende dieser Armierungsleiste 7 nach Fig. 2 übergreift diese Beschichtung 14 in Form einer Fahne 15 die innenseitige Beschichtung 10 aus hartem Kunststoff. Gemäß Fig. 3 weist die Armierungsleiste 7 eine an ihrer Innenseite frei- liegende, d.h. unbeschichtete Metallarmierung 8 auf. An ihrer Außenseite ist eine Beschichtung 18 aus hartem Kunststoff angebracht, deren Außenseite wiederum von einer Beschichtung 14 aus weichelastischem Werkstoff entsprechend der Ausführungsform nach Fig. 2 abgedeckt ist, der auch in diesem Fall zugleich die Lippe 12 bildet. Zwischen den Kunststoffbeschichtungen 14 und 18 besteht eine stoffschlüssige Verbindung. Die einseitig freiliegende Metallarmierung 8 ist in diesem Fall rost- und korrosionsfrei.

Die Figuren 4 und 5 geben zwei Ausführungsformen der Armierungsleiste 7 wieder, die ohne Metallarmierung ausgebildet ist, deren Körper (Steg 32) vielmehr entweder aus einem mit Mineralfaser armierten Kunststoff besteht, oder aber aus einem besonders harten Kunststoff, die beide dem Bauteil eine entsprechende Stabilisierung verleihen.

Bei der Armierungsleiste 7 in Fig. 4 ist an der Außenfläche 33 des Steges 32 eine Beschichtung 34 aus weichelastischem Werkstoff stoffschlüssig angeformt, wobei dieser Werkstoff zugleich die Lippe 12 am unteren Ende bildet. Bei der Ausführungsform nach Fig. 5 fehlt diese zusätzliche Beschichtung, und die Lippe 12 ist hier an das untere Ende 19 des Steges 32 angeformt. Die Ausführungsform nach Fig. 6 läßt lediglich schematisch erkennen, daß die in beliebiger Weise ausgestaltete Armierungsleiste 7 auch eine wesentlich längere Lippe 12 an ihrem unteren Ende besitzen kann. Diese Ausbildung eignet sich insbesondere für Anwendungsfälle mit größeren zu überbrückenden Toleranzen, um in jedem Fall durch die weichelastische Lippe 12 eine dichte Anlage an dem jeweiligen Karosserie- oder Gehäuseteil zu erreichen.

Armierungsleisten dieser Art sind bei dem Bauteil 1 an der Innenseite der Stege 2 und 3 angebracht, während bei dieser Ausführungsform der Brückenteil 5 des Bauteils 1 frei von Armierungen ist. Die Armierungsleiste 7 ist im Wege der Extrusion hergestellt. Hierbei verbinden sich die Einzelelemente, nämlich die Beschichtungen 10 sowie 14 und der Kunststoff der Lippe 12 stoffschlüssig miteinander und fest mit der Metallarmierung 8. Eine solche Armierungsleiste 7 läßt sich ohne allzu großen Aufwand exakt in einer Spritzgießform positionieren, so daß der Kunststoffkörper 6 an die beiden Armierungsleisten 7 angespritzt werden kann und sich auch hier eine stoffschlüssige Verbindung ergibt. Diese Armierungsleisten führen zu einer wirksamen Stabilisierung eines solchen Bauteils 1, so daß es auch bei extremen Temperaturunterschieden, denen es im Gebrauch ausgesetzt sein mag, nur noch vernachlässigbar geringe Längenänderungen erfährt. Die Stege 2, 3 übergreifen die an die Armierungsleisten angeformten weichelastischen Lippen 12 nur zum Teil, so daß der nach unten frei überstehende Bereich dieser Lippen 12 zur Anlage an der Karosserie - oder Gehäusefläche 4 gelangt. Ein erstes Beispiel für die Befestigung eines derartigen Bauteils 1 an der Anlagefläche 4 läßt die Fig. 7 erkennen. Hier ist an der Innenseite des Brückenteils 5 ein in den Innenhohlraum 51 des Kunststoffkörpers 6 hineinreichender Korb 16 angeformt, in dessen fensterartige Öffnung 17 ein andererseits an der Karosseriefläche 4 verbundener Halter eingesetzt wird, der an sich bekannt und infolgedessen nicht dargestellt ist.

Die Fig. 8 zeigt eine Ausführungsform, die sich für Bauteile 1 größerer Querschnittsbreite oder bei besonders starker Beanspruchung etwa senkrecht zur Auflagefläche 4 empfiehlt. Hier sind an der Armierungsleiste 7 innenseitig Schenkel 20 angeformt, die in den Innenhohlraum 51 des Kunststoffkörpers 6 hineinragen und an ihrem freien Ende einen verstärkten Auflagekopf 21 aufweisen, dessen untere Anlagefläche eine Beschichtung 22 aus weichelastischem Werkstoff aufweist. Dieser kann etwa demjenigen entsprechen, wie er für die Dichtungslippe 12 der Armierungsleiste 7 in Betracht kommt. Der Auflagekopf 21 weist bei der dargestellten Ausführungsform eine Hinterschneidung 23 auf, die ggf. das Einrasten eines mit der Fläche 4 verbundenen Befestigungselements ermöglicht.

Bei der Ausführungsform nach Fig. 9 ist das untere Ende der Armierungsleiste 7 mit einem nach innen gerichteten Ansatz 24 versehen. Außerdem ist die Metallarmierung 8 an ihrem unteren Ende mit einer Abwinklung 25 versehen, die in diesen Ansatz 24 hineinreicht. Dadurch wird die stabilisierende Wirkung der Armierungsleiste 7 ebenso erhöht wie eine stabile Hinterschneidung 23 zur Befestigung des Bauteils 1 an der Fläche 4 geschaffen. Gegebenenfalls kann auch hier die Unterseite 26 des Ansatzes 24 mit einer Beschichtung aus weichelastischem Werkstoff versehen sein.

Die Fig. 10 vereinigt nicht nur die Ausbildung etwa der Armierungsleisten 7 aus den vorbeschriebenen Ausführungsformen 4 und 5 in einem Bauteil 1. Es können die in den Stegen 2 und 3 unterschiedlichen Armierungsleisten 7 auch in beiden Stegen 2, 3 übereinstimmend ausgeführt sein. Hier sind außerdem die Armierungsleisten 7 mit den in sie integrierten Metallarmierungen 8 in die Krümmung zwischen Steg 2 bzw. 3 und Brückenteil 5 des Kunststoffkörpers 6 geführt. Es handelt sich hierbei lediglich um eine beispielsweise Wiedergabe, selbstverständlich können die Armierungsleisten 7 auch noch weiter nach oben bis in den Brückenteil 5 hinein verlängert sein.

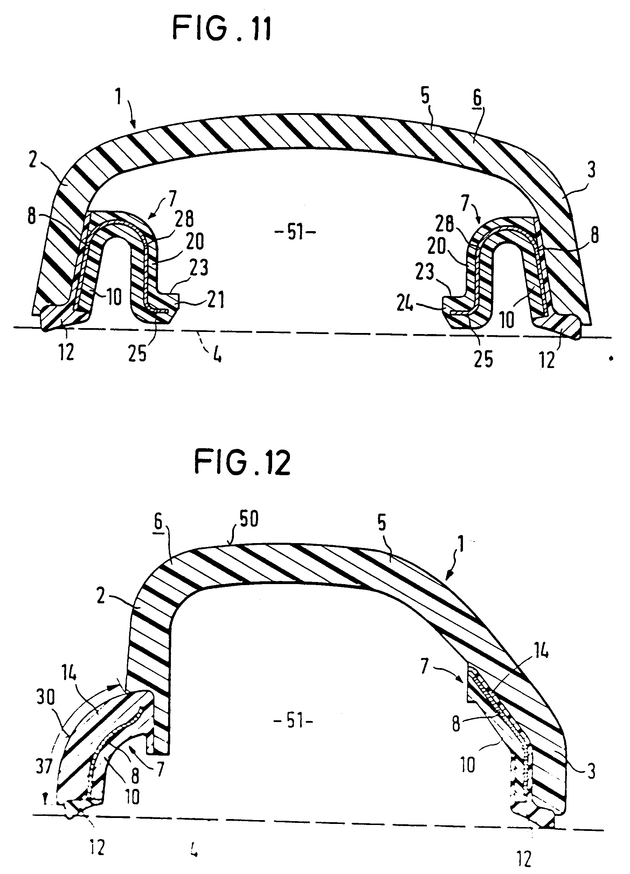

Die Fig. 11 stellt ein Bauteil mit einer weiteren Abwandlung der Armierungsleisten 7 dar. Diese sind wiederum mit einem innenseitig angeformten Schenkel 20 versehen. Die Metallarmierung 8 ist hierbei jedoch U-förmig gestaltet, wobei die U-Öffnung zu der Anlagefläche 4 weist. Der an die Metallarmierung 8 angeformte Schenkel 28 verläuft innerhalb des an die innenseitige Beschichtung 10 der Armierungsleiste 7 angeformten Schenkels 20 und verstärkt diesen einschließlich seines Kopfes 21 bzw. des Ansatzes 24.

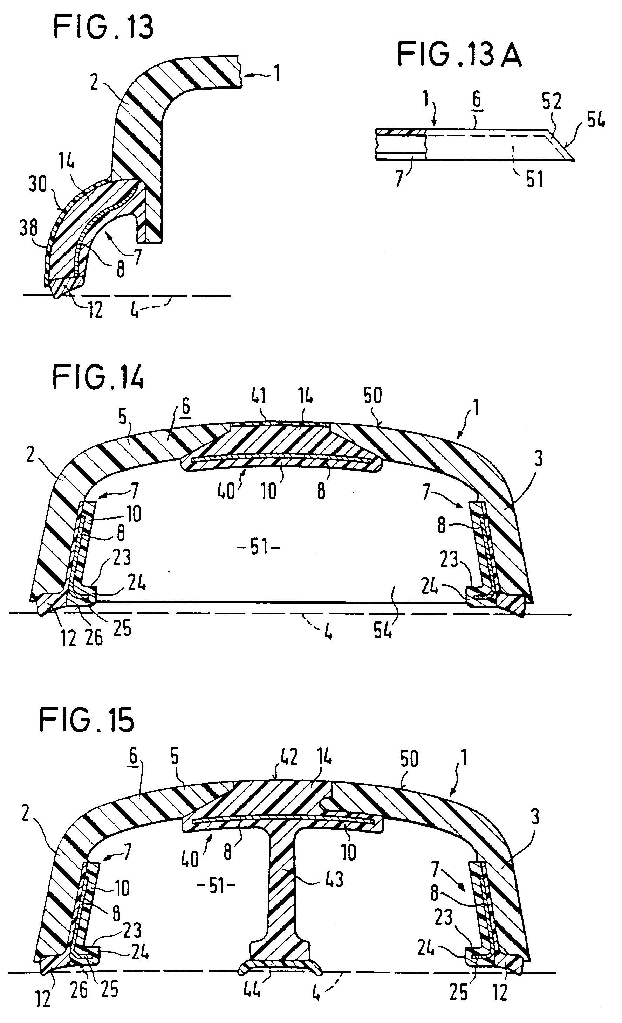

Bei dem in Fig. 12 wiedergegebenen Bauteil werden zwei unterschiedliche Armierungsleisten 7 verwendet. Die Leiste 7 rechts im Bild weist eine der oben beschriebenen Ausführung entsprechende Gestaltung auf, nämlich eine Metallarmierung 8 mit einer innenseitigen Beschichtung 10 aus härterem Kunststoff und einer außenseitigen Beschichtung 14 aus weicherem Werkstoff. An beide Beschichtungen 10, 14 ist die weichelastische Lippe 12 angeformt. An die außenseitige Beschichtung 14 ist der Kunststoffkörper 6 mit seinem Steg 3 stoffschlüssig angespritzt Die in Fig. 12 links dargestellte Armierungsleiste 7 ist vom gleichen Grundaufbau. Die lediglich anders, etwa s-artig formgestaltete Metallarmierung 8 weist an ihrer Innenseite die Beschichtung 10 auf. Die außenseitige Beschichtung 14 kann auch aus weichelastischem Werkstoff bestehen und ist wesentlich dicker und bildet hier einen Teil des Steges 2 des Bauteils 1. Die Außenfläche 30 dieser Beschichtung 14 ist zugleich die Außenfläche des Steges 2 des Bauteils 1. Sind bei der wiedergegebenen Ausführungsform der Steg 3, ein Teil des Steges 2 und der Brückenteil 5 des Bauteils 1 beispielsweise aus einem schwarzen Kunststoff gebildet, die außenliegende Beschichtung 14 dieser Armierungsleiste 7 hingegen farbig, beispielsweise rot, gestaltet, wirkt nach Befestigung des Bauteils 1 auf einem Karosserieteil 4 die von außen sichtbare Fläche 30 der Beschichtung 14 dieser Armierungsleiste 7 in dem Bereich 37 als eine farbige Zierleiste an dem Bauteil 1. Die Lippe 12 mag hingegen wieder schwarz eingefärbt sein. Bei dieser Ausführungsform weist die Metallarmierung 8 der Armierungsleiste 7 an beiden Seiten, innen wie außen, eine einheitliche Beschichtung aus ein und demselben Kunststoff auf. Die Fig. 13 zeigt eine von dieser Spezialausbildung abweichende Ausgestaltung, hier ist die außenseitige Beschichtung 14 der Metallarmierung 8 mit einer äußeren Abdeckschicht 38 versehen. Es genügt mithin, um bei dem vorgenannten Beispiel zu bleiben, allein diese Schicht 38 andersfarbig auszubilden, um den gewünschten Zierleisten-Effekt hervorzurufen. Gegebenenfalls kann diese Schicht 38 auch extrem dünn sein und ggf. aus einer äußeren Folienabdeckung bestehen. Dies insbesondere dann, wenn eine matallisch erscheinende Außenfläche 30 erwünscht ist.

Eine weitere Alternative geht aus Fig. 14 hervor, wobei die beiden Stege 2 und 3 des Bauteils 1 nach einer der vorbeschriebenen Ausführungsformen ausgebildet sind. Zusätzlich ist hier eine Weitere Armierungsleiste 40 in den Brückenteil 5 des Kunststoffkörpers 6 eingefügt, diese besteht wiederum aus einer Metallarmierung 8 mit der innenseitigen Beschichtung 10 und der außenseitigen Beschichtung 14. An dieser ist wiederum eine Abdeckschicht 41 stoffschlüssig angeformt, welche beispielsweise eine von der Außenfläche des Kunststoffkörpers 6, einschließlich seiner Stege 2, 3 abweichende Einfärbung oder Oberflächengestaltung aufweist, um wiederum einen Zierleisten-Effekt hervorzurufen. An die Stelle dieser Abdeckschicht 41 könnte jedoch auch eine Überspritzung mit dem Werkstoff des Brückenteils 5 dieses Kunststoffkörpers 6 treten. Die Armierungsleiste 40 würde dann lediglich der Verstärkung dieses Bauteils 1 dienen. Eine solche zusätzliche Verstärkung im Brückenteil 5 läßt auch die Ausführungsform nach Fig. 15 erkennen, und hier ist wiederum die außenseitige Beschichtung 14 der Armierungsleiste 40 bis zur Außenfläche 42 geführt. Wenn der Beschichtungswerkstoff eine andere Einfärbung aufweist als die Außenseite des Kunststoffkörpers 6, würde auch in diesem Fall die Armierungsleiste 40 den vorbezeichneten Zierleisten-Effekt ergeben können. Die Verbindung dieser Armierungsleiste ist in Fig. 15 in zwei verschiedenen Varianten dargestellt, die wahlweise Verwendung finden können. Die innenseitige Beschichtung 10 dieser Armierungsleiste 40 ist mit einem Fuß 43 versehen, der in den Innenraum 51 des Bauteils 1 hineinragt und an seiner Unterseite eine kissenartige Beschichtung 44 aus weichelastischem Werkstoff aufweist, damit eine schonende Anlage der Fläche 4 gewährleistet ist. Diese Ausführungsform kommt insbesondere bei Bauteilen 1 von größerer Breite in Frage, die einer weiteren Abstützung neben den Stegen 2 und 3 bedürfen.

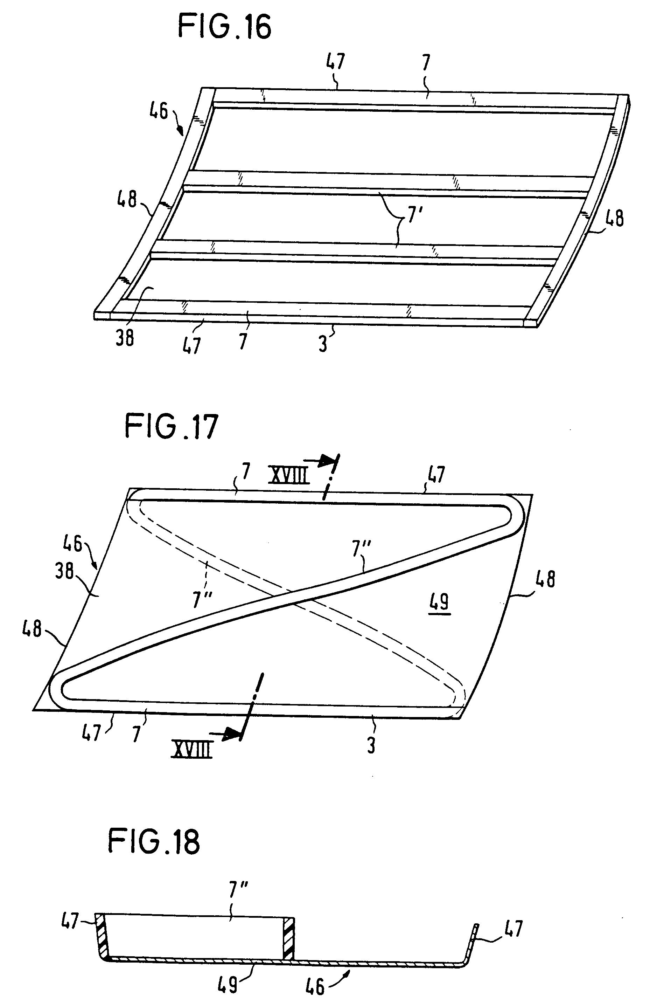

Während die vorgenannten Ausführungsformen stets von dem Beispiel einer Leistenform des Bauteils 1 ausgehen, zeigen die Fig. 16 bis 18 ein eher plattenförmig gestaltetes Bauteil von gedrungener Konfiguration, wie es aber ebenfalls zur Verkleidung, zum Schutz oder dergl. von Karosserieteilen, aber auch von Gehäusen anderer Art Verwendung finden kann. Dieses Bauteil ist mit 46 bezeichnet. Entlang seiner Längskanten 47, aber auch gegebenenfalls an den Querkanten 48 sind Armierungsleisten 7 nach einer beliebigen oben beschriebenen Ausführungsform in der dort genannten Weise stoffschlüssig an den das Bauteil 46 bildenden Kunsttoff angeformt. Zwischen den Armierungsleisten 7 entlang der Längskanten 47 dieses Bauteils 46 sind bei der wiedergegebenen Ausführungsform noch zusätzliche Armierungsleisten 7' vorgesehen, die der Verstärkung bzw. Versteifung eines solchen Bauteils wegen seiner größeren Breite dienen. Auch diese Armierungsleisten 7' können sich mit einem zweckmäßig weichelastischen Fuß auf der jeweiligen Unterlage abstützen. Eine Alternative hierzu zeigt die Fig. 17. Dort sind die beiden entlang der Längskanten 47 verlaufenden Armierungsleisten 7 durch eine weitere Armierungsleiste 7'' verbunden, die diagonal über den plattenförmigen Teil 49 des Bauteils 46 verläuft. Gegebenenfalls kann auch eine weitere solche diagonal verlaufende Armierungsleiste 7'' vorgesehen sein, so daß sich eine X-förmige Konfiguration ergibt. Auch in diesem Fall sind die Schmalkanten 48 des Bauteils 46 mit weiteren Armierungsleisten versehen.

Es liegt im Rahmen der Erfindung, die Auflage des Bauteils nicht unmittelbar unter den Außenstegen 2, 3 vorzusehen, sondern die der Auflage dienenden Lippen 12 mehr zur Innenseite dieser Stege 2, 3 des Bauteils 1 zu versetzen, während die eigentliche Stegunterkante in geringem Abstand von der Anlagefläche 4 verbleibt. Auf diese Weise können, was im Karosseriebau vielfach vorkommt, Nachlackierungsarbeiten ungehindert durch das Bauteil vorgenommen und bis unter dessen Steg durchgeführt werden.

Das Kunststoff-Bauelement in Form einer Seitenleiste 1, wie vorstehend an Hand der Figuren 1 bis 18 beschrieben wurde, bestehend aus wenigstens zwei armierten Einlageteilen jeweils in Form einer Leiste 7 an den einander gegenüberliegenden Längsrändern des Kunststoff-Bauelements sowie einem an diese Leisten in Spritzgußtechnik angeformten Bauelement-Körper (Kunststoffkörper 6), ist in sich formstabil aufgrund der Verwendung entsprechend harten Kunststoffmaterials für den Formkörper 6. Die Armierungsleisten 7 sorgen zuverlässig dafür, daß die Seitenleiste 1 sich im Bereich der Anlage- und Befestigungsstellen am Träger in gleicher Weise thermisch ausdehnt wie der Träger (Karosserieblech). Das Stoßaufnahmevermögen der Seitenleiste ist durch die Armierung unbeeinträchtigt, da aufgrund der Wölbung der Seitenleiste (konvexe Wölbung vom Karosserieblech weg) der erhöhte mittlere Bereich der Leiste als erstes in Kontakt mit dem Kollisionsgegenstand kommt. Bei nicht übermäßig starken Stößen wird folglich der Stoß ohne bleibende Verformung des Trägers von der Seitenleiste 1 aufgenommen. Dies gilt auch für die Ausführungsform gemäß Fig. 15, da die dortige Auflage aus weichelastischem Kunststoff (kissenartige Beschichtung 44) zwischen Fuß 43 und Träger, ggf. in Verbindung mit entsprechender Verformbarkeit des Fußes 43 selbst, für den gewünschten Federweg sorgt. Entsprechend dem gewählten Material in Abhängigkeit von der jeweiligen Stoßintensität wird der jeweilige Stoß elastisch aufgefangen oder unter bleibender Verformung des Kunststoff-Bauelements abgefangen. Ein Auswechseln der auf diese Weise nach Stoßbelastung deformierten Seitenleiste 1 ist einer Karosserieblech-Reparatur vorzuziehen.

Gemäß der Prinzipskizze Fig. 13a kann wenigstens eines der Enden der Seitenleiste 1 mit einem Endstück 52 ausgebildet sein (hier in Form einer schrägen Abschluß-Stirnwand 54, die auch senkrecht zur Leisten-Längsrichtung orientiert sein kann). Dieses Endstück wird zusammen mit dem Bauelementkörper (Kunststoff-Körper 6) in der Spritzgußform an die beiden, in die Form eingelegten Einlageteile (Armierungsleisten 7 längs der Längsränder der Seitenleiste 1) angespritzt, was einen glatten, unauffälligen Übergang zwischen Kunststoff-Körper 6 und Endstück 52 ergibt. Durch das Endstück 52 wird der zwischen der gewölbten Seitenleiste 1 und dem Träger (Karosserieblech) gebildete Hohlraum (Innenraum 51) abgeschlossen, so daß das Eindringen von Feuchtigkeit (Korrosionsgefahr) und Schmutz vermieden wird.

Die im folgenden zu beschreibenden Ausführungsbeispiele haben prinzipiell gleichen Aufbau wie die vorstehend beschriebenen Ausführungsbeispiele mit dem Unterschied, daß als Material für den Kunststoff-Körper 6' nunmehr Weichkunststoff verwendet wird.

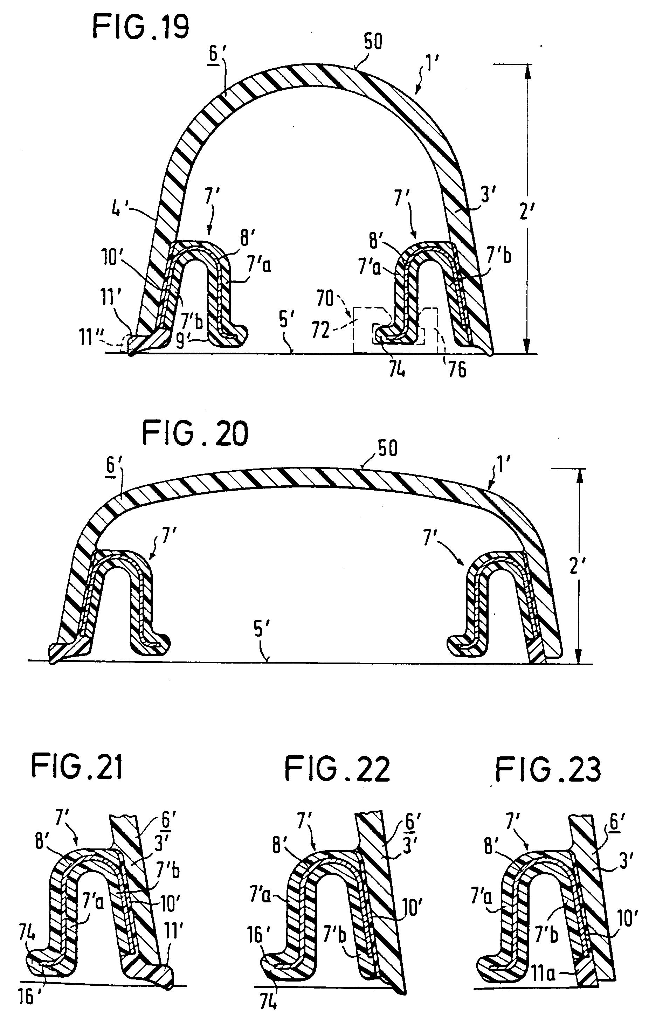

Die Fig. 19 zeigt im Schnitt ein erfindungsgemäßes Kunststoff-Bauelement in Form einer Seitenleiste 1', die vergleichsweise stark gewölbt ist und eine gegenüber der Ausführungsform nach Fig. 20 wesentlich größere Höhe 2' aufweist und dafür entsprechend schmäler ausgebildet ist. Die Seitenleiste 1' gemäß Fig. 19 ist mit ihren Längsrändern am jeweiligen Träger befestigt, insbesondere durch Verklebung oder Verklipsung. In den Figuren 19 und 20 ist eine Gehäuse- oder Karosseriefläche mit 5' bezeichnet.

Die Seitenleiste 1' gemäß Figuren 19 und 20 besteht aus einem Bauelement-Körper (Kunststoffkörper 6') aus einem gummiartigen Werkstoff oder einem Kunststoff (Vollwerkstoff oder Schaumwerkstoff mit durchgehend glatter Außenfläche 50). Seine Formstabilität erhält die Leiste 1' durch sich längs der beiden Leistenlängsränder erstrekkende Einlageteile in Form von Armierungsleisten 7', die entsprechend dem jeweiligen Einsatzzweck unterschiedlich aufgebaut sein können, beispielsweise gemäß den Leisten 7 der vorstehend an Hand der Figuren 1 bis 18 beschriebenen Ausführungsformen mit steifem Formkörper 6. Die Leisten 7' sind jeweils an der Innenseite von Schenkeln 3', 4' (Längsrandabschnitte des Formkörpers 6') angebracht, und zwar stoffschlüssig durch Anspritzen des Formkörpers 6' an die beiden in die Spritzgußform eingelegten Leisten 7'.

Die im Querschnitt U-förmige, zum Träger hin offene Leiste 7' nach der Ausführungsform gemäß Fig. 19 weist eine innere Metallarmierung 8' in Form eines ebenfalls U-förmigen Blechstreifens auf, an dessen Stelle auch Metall-, insbesondere Leichtmetallprofile oder Blechprofile anderer Gestaltung treten können. Die Metallarmierung 8' ist allseits von Kunststoff ummantelt, wobei an der Leisteninnenseite eine Beschichtung 9' aus hartem, ggf. mineralfaserverstärkten Kunststoff angeformt ist, die sich auch über die Außenseite des inneren Leisten-Schenkels 7'a erstreckt. An der Außenseite des äußeren Seitenschenkels 7'b ist dagegen eine Beschichtung 10' aus einem weichen Kunststoff angespritzt, an welche wiederum der Schenkel 4' angeformt ist. Die Beschichtung 10' ist an ihrem unteren Ende zu einer Lippe 11' erweitert. In den Figuren ist generell die Ausgangsform der weichelastischen Auflagen an den Längsrändern der Leiste 1' dargestellt; bei Anbringung am Träger ergibt sich eine dementsprechende Verformung, wie in Fig. 19 links mit einer punktierten Umrißlinie 11'' der Lippe 11' angedeutet ist. Diese weichelastische Auflage sorgt für eine gleichzeitig abdichtende und schonende Anlage am Träger mit Ausgleich von Fertigungstoleranzen (des Trägers und/oder des Kunststoff-Bauelements).

In Fig. 19 rechts ist mit einer unterbrochenen Umrißlinie ein Befestigungselement 70 angedeutet, welches mit dem Karosserieblech in nicht dargestellter Weise starr verbindbar ist (insbesondere durch Verklebung oder Verklipsung) und welches jeweils mit dem inneren Schenkel 7'a der Leiste 7' verrastbar ist. Hierzu weist das Befestigungselement einen nach oben abstehenden Rasthaken 72 auf, der das innen abgewinkelte untere Ende 74 des Schenkels 7'a übergreift. Um das Ende 74 in dieser Lage zu halten (der Kunststoffkörper 6' besteht aus elastisch nachgiebigem Material), liegt an der vom Rasthaken 72 abgelegenen Seite des Schenkels 7'a ein als Ausrastsicherungselement dienender, nach oben abstehender Bügel 76 des Befestigungselements 70 an. Dieser ist vom Rasthaken 72 momentan elastisch wegspreizbar, um das Einführen des Endes 74 in das Befestigungselement 70 zu ermöglichen.

Die Figuren 21 bis 23 zeigen alternative Ausbildungen des Einlageteils in Form einer Armierungsleiste 7'. Die Ausführungsform gemäß Fig. 21 entspricht der bereits beschriebenen Armierungsleiste 7' in Fig. 19 links. Die Beschichtung 10' an der Außenseite des jeweils äußeren Schenkels 7'b ist nach unten zur Lippe 11' erweitert, die wiederum zur elastischen Anlage an der Karosserie dient. Eine weitere Funktion dieser Schicht 10' ist die, das Anformen des jeweiligen Schenkels 3' des Kunststoffkörpers 6' zu erleichtern.

Die Ausführungsform gemäß Fig. 22, die der rechten Hälfte der Fig. 19 entspricht, verzichtet auf die weichelastische Dichtlippe am unteren Ende des äußeren Schenkels 7'b. Dafür ist der untere Rand des jeweiligen Schenkels 3' des Körpers 6' dichtlippenartig ausgebildet zur unmittelbaren Anlage an der Karosserie.

Bei der Ausführungsform gemäß Fig. 23 schließlich ist an Stelle der Dichtlippe 11' als Fortsetzung der weichen Beschichtung 10' nach unten eine relativ kompakte, im Querschnitt rechteckige Weichbeschichtung 11a vorgesehen mit gleicher Dicke wie der äußere Schenkel 7'b. Der Schenkel 3' des Kunststoffkörpers 6' endet mit geradem Abschluß knapp oberhalb der Weichbeschichtung 11a. Die Ausbildungsform entspricht der gemäß Fig. 20, rechte Hälfte.

Sämtlichen Ausführungsformen gemäß Figuren 21 bis 23 ist die beschriebene Querschnittsform der Armierungsleiste 7'gemeinsam sowie die Armierung mit einer Metallarmierung 8' entsprechender Profilform. Um die Festigkeit des abgewinkelten, der Befestigung gemäß Fig. 19 dienenden Endes 74 des jeweils inneren Schenkels 7'a zu erhöhen, ist der entsprechende Schenkel der Metallarmierung 8' am unteren Ende ebenfalls mit einer nach innen gerichteten Abwinkelung 16' versehen. Im übrigen sind auch andere Formgestaltungen der Armierungsleiste 7' in Abhängigkeit vom jeweils vorgesehenen Befestigungssystem denkbar.

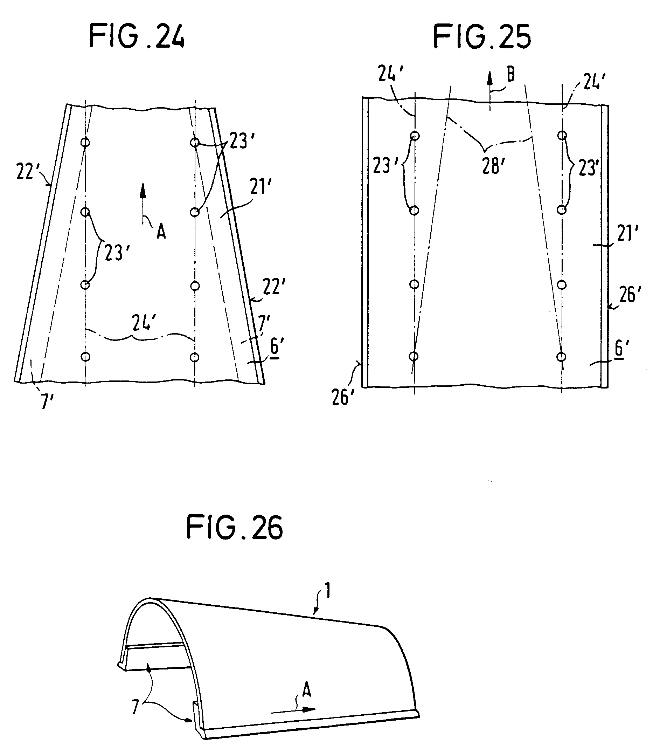

Aufgrund der Verwendung eines weichelastischen Kunststoffmaterials für den Bauelement-Körper (Körper 6') wird die jeweilige Querschnittsform des Kunststoff-Bauelements (Leiste 1') durch die Form des Zuschnitts für den Formkörper 6' sowie die jeweilige Anordnung der am Träger festgelegten Armierungsleisten 7' bestimmt. Die Fig. 24 zeigt einen sich in Längsrichtung A (in Fig. 24 nach oben) verjüngenden Zuschnitt 21' für den Formkörper 6' mit strichliert angedeuteten Armierungsleisten 7' an den einander gegenüberliegenden Längsrändern 22'.

Sind nun die zur Befestigung dieses Körpers 6' an einem Träger dienenden Befestigungselemente 23' auf zwei zueinander parallelen Geraden 24' angeordnet, so ergibt sich eine Form ähnlich Fig. 26 mit sich in Richtung A vermindernder Höhe bei konstanter Breite, entsprechend dem Abstand der Geraden 24'.

Verwendet man dagegen gemäß Fig. 25 einen Zuschnitt 21' mit parallelen Seitenkanten 26', so erhält man eine sich in Längsrichtung der Leiste ändernde Querschnittsform dann, wenn die Befestigungselemente 23' nicht auf zueinander parallelen Geraden 24', sondern auf zueinander schräg verlaufenden Geraden 28' angeordnet sind. Nähern sich die beiden Geraden 28' einander in Pfeilrichtung B gemäß Fig. 25, so erhält man dementsprechend eine Bauform mit sich in Richtung B vergrößernder Bauhöhe und gleichzeitig verringernder Breite.

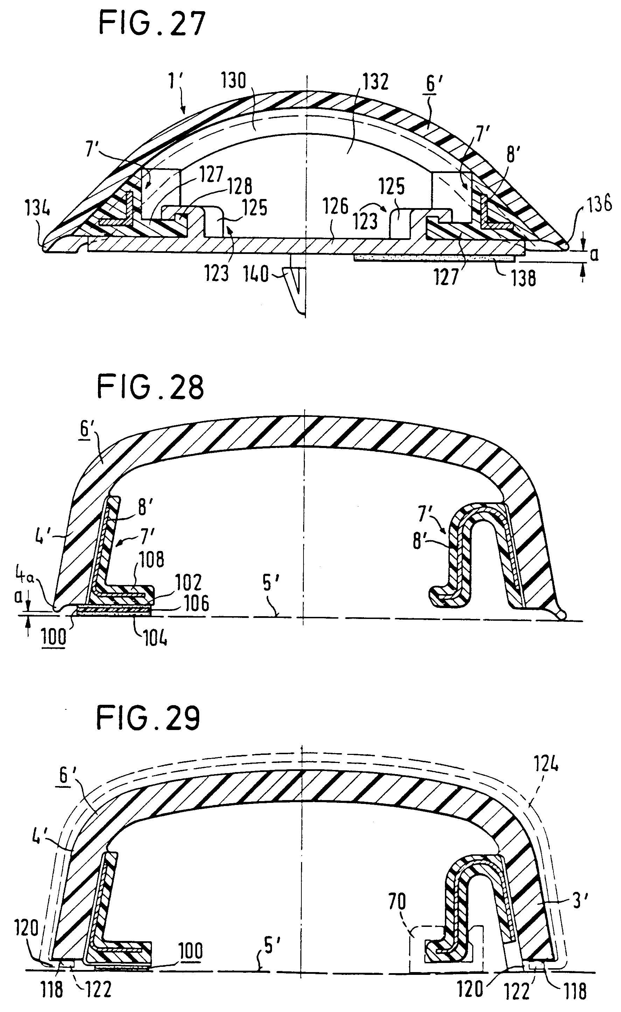

Fig. 28 zeigt zwei verschiedene Befestigungsarten, die für sämtliche vorstehend beschriebenen Ausführungsformen in Frage kommen. In der linken Hälfte der Fig. 28 ist die Klebetechnik dargestellt mit einem an die Unterseite der Leiste 7' angeklebten, doppelseitig klebenden Klebeband 100. Die an die Leiste 7' angeklebte Klebeschicht ist mit 102, die an der Trägerfläche 5' angeklebte Klebeschicht mit 104 und die dazwischenliegende Tragschicht mit 106 bezeichnet. Man erkennt, daß im angeklebten Zustand ein lichter Abstand a zwischen dem unteren, als Randlippe 4a ausgebildeten Ende des Schenkels 4' des Körpers 6' und der Karosseriefläche 5' ausgebildet ist. Dieser lichte Abstand ist für die Standfestigkeit der Verklebung wichtig. Würde nämlich der Schenkel 4' unter Vorspannung an der Karosseriefläche 5' anliegen, so würde diese Vorspannung zu einer Lockerung der Verklebung führen. Um eine ausreichend große Klebefläche zu erhalten, ist der untere Horizontalschenkel 108 der L-förmig abgewinkelten Leiste 7'dementsprechend weit nach innen verlängert. Die Leiste 7' ist mit einer inneren Metallarmierung 8' aus einem entsprechend L-förmig abgewinkelten Blechprofil versehen. Die gegenüberliegende Leiste 7' kann in gleicher Weise ausgebildet und mit dem Karosserieblech verklebt sein (die Fig. 28 ist dementsprechend in ihrer rechten Hälfte ergänzt zu denken).

Alternativ kommt hierzu auch eine Befestigung über gesonderte Befestigungselemente in Frage, wie bereits an Hand von Fig. 19, rechte Hälfte erläutert wurde (Befestigungselement 70).

Die gegenüberliegende Leiste 7' kann in entsprechender Weise über Befestigungselemente 110 mit dem Träger verbunden sein (die Fig. 28 ist dementsprechend in ihrer linken Hälfte zu ergänzen).

Die Fig. 29 zeigt wiederum einen Körper 6' mit wahlweiser Befestigung mittels doppelseitigem Klebeband 100 oder mittels gesonderter Befestigungselemente 70, wobei im Unterschied zur Fig. 28 die untere Stirnfläche 118 des jeweiligen Schenkels 3', 4' in deutlichem Abstand und parallel zur Karosseriefläche 5' verläuft. In die auf diese Weise gebildete Nut 120 kann ein nach innen umgebogener Rand 122 eines Lackier-Schutzmantels 124 eingesteckt werden. Dieser Mantel erlaubt eine Karosserieblech-Lackierung ohne gleichzeitige Lackierung des Kunststoff-Bauelements.

Die Ausführungsform gemäß Fig. 27 schließlich zeigt die Verwendung einer Befestigungsplatte 126, an der wiederum die an einander gegenüberliegenden Längsrändern der Leiste 1' vorgesehenen Befestigungselemente 123 angebracht sind. Die Befestigungselemente 123 sind der Einfachheit halber als Haken 125 dargestellt. Sie können einstückig mit der Befestigungsplatte 126 ausgebildet sein. Die Haken 125 übergreifen wiederum die nach innen gerichteten Schenkel 127 der beiden Leisten 7', wobei zur Verbesserung des gegenseitigen Eingriffs diese Schenkel an ihrem äußeren Ende wiederum mit nach oben gerichteten Hakennasen 128 ausgebildet sein können. Die beiden Leisten 7' sind bevorzugt armiert, insbesondere durch eine Metallarmierung 8', z.B. in Form des dargestellten L-Profils.

Die Befestigungselemente 123 können entsprechend den Befestigungselementen 23' in Fig. 25 auf zueinander geneigt verlaufenden Geraden 28' an der Befestigungsplatte 126 angeordnet sein, so daß man die in Fig. 27 angedeutete konische Bauform erhält. Auch hier kann bei entsprechender Formgebung der Spritzgußform ein Abschluß des Innenraums 130 an beiden Axialenden des Kunststoff-Bauelements durch dementsprechend angeformte Stirnwände 132 (axial angeformtes Endstück) vorgesehen sein.

Entsprechend der linken Hälfte der Fig. 27 kann die Befestigungsplatte mit dem Träger (Karosserieblech) verklipst sein (Klipskopf 140), wobei dann eine Auflage des Umfangsrands des Körpers 6' in Form einer Dichtlippe 134 an der Karosserie möglich ist.

Bei einer Verklebung der Befestigungsplatte 126, insbesondere über ein doppelseitiges Klebeband 138 (siehe rechte Hälfte der Fig. 27), ist wiederum ein geringer lichter Abstand a von beispielsweise 0,1 bis 1 mm zwischen dem als Randlippe 136 asugebildeten Umfangsrand des Körpers 6' und der Karosseriefläche einzuhalten.

Die vorstehend beschriebenen Ausführungsformen zeichnen sich vor allem durch guten Anschluß des Kunststoff-Bauelements an den jeweiligen Träger über die armierten, ggf. mit weichelastischen Auflagen versehenen Längsränder aus sowie durch gute Stoßaufnahme ohne Verformung des Trägers bei kostengünstiger Herstellbarkeit. Hervorzuheben ist auch das angenehme Aussehen des Kunststoff-Bauelements ohne störende Übergangsnähte und ohne von außen erkennbare Befestigungsmittel.

## Patentansprüche

1. Selbsttragendes Kunststoff-Bauelement zur Anbringung an einem Träger, insbesondere an einer Karosserie oder einem Gehäuseteil, umfassend
- einen länglichen Bauelementkörper (6,6') mit einem im wesentlichen U-förmigen Querschnitt senkrecht zur Längsachse, dessen beide Seitenschenkel jeweils einen Steg (2,3) mit einem Randbereich bilden zur Anbringung an dem Träger mit Abstand (a) des Randbereichs zum Träger oder mit Berührung des Trägers durch den Randbereich,
- wenigstens eine Armierungsleiste (7,7'), an die der Bauelementkörper (6,6') angespritzt ist,
**dadurch gekennzeichnet,**
daß zwei gesonderte, längliche, voneinander beabstandete, parallel zur Längsachse verlaufende Armierungsleisten (7,7') vorgesehen sind, die sich jeweils längs eines der beiden Randbereiche erstrecken, und
daß an wenigstens einem Ende des Bauelements ein die beiden Stege (2,3) zum Abschluß des Innenraums des Bauelements miteinander verbindendes Endstück vorgesehen ist, welches gleichzeitig mit dem Bauelementkörper an die Armierungsleisten (7,7') übergangslos angespritzt ist.

2. Kunststoff-Bauelement nach Anspruch 1, **dadurch gekennzeichnet,** daß die beiden Armierungsleisten (7,7') Extrusionsteile sind.

3. Kunststoff-Bauelement nach Anspruch 2, **dadurch gekennzeichnet,** daß wenigstens eine der beiden Armierungsleisten (7,7') mit einer aufextrudierten, weichelastischen Auflage zur Anlage am Träger ausgebildet ist, vorzugsweise in Form jeweils einer Dichtlippe (12,11').

4. Kunststoff-Bauelement nach einem der Ansprüche 1 bis 3 **dadurch gekennzeichnet,** daß wenigstens einer der Stege (2,3) mit einer anliegenden weichelastischen Auflageschicht (10') zur Anlage am Träger ausgebildet ist, vorzugsweise in Form einer Dichtlippe (11').

5. Kunststoff-Bauelement nach einem der vorhergehenden Ansprüche, **dadurch gekennzeichnet,** daß wenigstens einer der Stege mit einer lediglich geringen Abstand (a) zum Träger aufweisenden Randlippe (4a;136) ausgebildet ist.

6. Kunststoff-Bauelement nach einem der vorhergehenden Ansprüche, **dadurch gekennzeichnet,** daß wenigstens eine der Armierungsleisten (7,7') eine Metallarmierung (8) aufweist.

7. Kunststoff-Bauelement nach Anspruch 6, **dadurch gekennzeichnet,** daß die Metallarmierung (8) zumindest an der dem Innenraum (51) des Bauelements zugewandten Fläche (9) der Metallarmierung (8) beschichtet ist.

8. Kunststoff-Bauelement nach Anspruch 6 oder 7, **dadurch gekennzeichnet,** daß die Metallarmierung (8) an der vom Innenraum (51) des Bauelements abgewandten Fläche (11) der Metallarmierung wenigstens im Bereich des dem Träger nächstgelegenen Randes mit weichelastischem Werkstoff beschichtet ist.

9. Kunststoff-Bauelement nach einem der Ansprüche 6 bis 8, **dadurch gekennzeichnet,** daß die Armierungsleisten (7;7') als vorzugsweise zumindest teilweise kunststoffbeschichtete Metallprofile oder Metallbleche ausgebildet sind.

10. Kunststoff-Bauelement nach einem der Ansprüche 1 bis 5, **dadurch gekennzeichnet,** daß die Armierungsleisten (7;7') als faserverstärkte, vorzugsweise glasfaserverstärkte, Kunststoffteile ausgebildet sind.

11. Kunststoff-Bauelement nach einem der Ansprüche 1 bis 5, **dadurch gekennzeichnet,** daß die Armierungsleisten (7;7') als Hartkunststoffteile ausgebildet sind.

12. Kunststoff-Bauelement nach einem der vorhergehenden Ansprüche, **dadurch gekennzeichnet,** daß die Armierungsleiste zumindest bereichsweise bis an die Außenfläche (50) des Bauelementkörpers (6) reicht.

13. Kunststoff-Bauelement nach einem der Ansprüche 1 bis 11, **dadurch gekennzeichnet,** daß wenigstens eine der Armierungsleisten (7;7') als Zierelement, vorzugsweise Zierstreifen, ausgebildet ist.

14. Kunststoff-Bauelement nach Anspruch 12 oder 13, **dadurch gekennzeichnet,** daß wenigstens eine der Armierungsleisten (7;7') im Bereich der Außenseite des Kunststoff-Bauelements (1;1') mit anderer Farbgebung und/oder Oberflächenprofilierung ausgebildet ist als der sich anschließende Bauelementkörper.

15. Kunststoff-Bauelement nach einem der Ansprüche 12 bis 14, **dadurch gekennzeichnet,** daß wenigstens eine der Armierungsleisten (7) eine metallisch aussehende Oberfläche aufweist.

16. Kunststoff-Bauelement nach einem der vorhergehenden Ansprüche, **dadurch gekennzeichnet,** daß wenigstens eine der Armierungsleisten (7) der Kontur des Bauelementkörpers (6,6') folgt oder von dieser abweichenden Querschnitt aufweist.

17. Kunststoff-Bauelement nach einem der vorhergehenden Ansprüche, **dadurch gekennzeichnet,** daß das Kunststoff-Bauelement unmittelbar am Träger oder an einer am Träger anbringbaren Befestigungsplatte (126) befestigbar ist.

18. Kunststoff-Bauelement Anspruch 17, **dadurch gekennzeichnet,** daß die Armierungsleisten (7;7') und/oder der Bauelement-Körper mit Befestigungsvorsprüngen (24;17;127,128) und/oder Befestigungsausnehmungen ausgebildet ist, an welche am Träger oder an der Befestigungsplatte (126) angebrachte Befestigungselemente zur Anbringung des Kunststoff-Bauelements (1;1')am Träger angreifen.

19. Kunststoff-Bauelement nach einem der Ansprüche 1 bis 18, **gekennzeichnet durch** wenigstens eine weitere Armierungsleiste (40;43), die in einem mittleren Bereich des Kunststoff-Bauelements (1) mit Abstand zu den Randbereichen angeordnet ist.

20. Kunststoff-Bauelement nach Anspruch 19, **dadurch gekennzeichnet,** daß die weitere Armierungsleiste als Stütz-Steg (43) ausgebildet ist, mit welchem sich ein mittlerer Bereich des Kunststoff-Bauelements (1) am Träger abstützt und welcher in Stützrichtung nachgiebig ausgebildet ist,vorzugsweise über eine Auflage (44) aus weichelastischem Kunststoff.

21. Kunststoff-Bauelement nach einem der Ansprüche 1 bis 20, **dadurch gekennzeichnet,** daß im Randbereich eine zum Randbereich parallele, nach außen offene Nut (120) vorgesehen ist, welche vorzugsweise zwischen dem Träger und dem von der Armierungsleiste (7') in Abstand zum Träger gehaltenen Bauelementkörper (1') gebildet ist.

22. Kunststoff-Bauelement nach einem der Ansprüche 1 bis 21, **dadurch gekennzeichnet,** daß die Armierungsleisten (7;7') mit einer Klebeschicht (100;138) versehen sind zum Ankleben des Kunststoff-Bauelements (1;1') am Träger.

23. Kunststoff-Bauelement nach einem der Ansprüche 1 bis 22, **dadurch gekennzeichnet,** daß wenigstens ein gesondertes Befestigungselement (23';125) zur Anbringung des Kunststoff-Bauelements am Träger vorgesehen ist, welches an wenigstens eine der Armierungsleisten (7,7') angreift, vorzugsweise über eine Rastverbindung.

24. Kunststoff-Bauelement nach einem der Ansprüche 1 bis 23, **dadurch gekennzeichnet,** daß der Bauelementkörper (6') mit Weichkunststoff gebildet ist.

25. Kunststoff-Bauelement nach Anspruch 24, **dadurch gekennzeichnet,** daß die Befestigungselemente (23';125) zur Anbringung des Kunststoff-Bauelements (1') am Träger dem Bauelementkörper (6') eine vorgegebene Form aufprägen, vorzugsweise mit sich entlang einer vorgegebenen Richtung, insbesondere der Längsrichtung (A) des länglichen Kunststoff-Bauelements (1'), ändernder Querschnittsform, und daß die an den beiden Randbereichen vorgesehenen Befestigungselemente (125) an einer gemeinsamen Befestigungsplatte (126) vorgesehen sind, die wiederum am Träger anbringbar ist.

26. Kunststoff-Bauelement nach Anspruch 25, **dadurch gekennzeichnet,** daß die Befestigungselemente (23';125) dem Kunststoff-Bauelement (1') eine sich in einer Richtung verjüngende Form aufprägen.

27. Kunststoff-Bauelement nach Anspruch 25 oder 26, **dadurch gekennzeichnet,** daß die Befestigungsplatte (126) mit einer Haftklebstoffschicht (138) zum Ankleben am Träger versehen ist.

28. Kunststoff-Bauelement nach einem der vorhergehenden Ansprüche, **dadurch gekennzeichnet,** daß an der dem Innenraum (51) des Bauelements zugewandten Innenseite der Armierungsleiste (7) in den Innenraum (51) ragende, zur Abstützung des Bauteils dienende Elemente (20) angeformt sind, die über eine Auflageschicht aus weichelastischem Werkstoff am Träger anliegen.

29. Kunststoff-Bauelement nach einem der vorhergehenden Ansprüche, **dadurch gekennzeichnet,** daß an der dem Innenraum (51) des Bauelements zugewandten Seite der wenigstens einen Armierungsleiste (7) in den Innenraum (51) ragende, zur Befestigung des Bauelements (1) dienende Elemente, wie z.B. Noppen, Schenkel (20) oder dergl., aus hartem Kunststoff angeformt sind.

30. Kunststoff-Bauelement nach einem der Ansprüche 6 bis 29, **dadurch gekennzeichnet,** daß die Metallarmierung (8) mit Ausstanzungen versehen ist zur Erleichterung des Biegens des Kunststoff-Bauelements.

31. Kunststoff-Bauelement nach Anspruch 29, **dadurch gekennzeichnet,** daß ein an der Armierungsleiste (7) angeordneter Schenkel (20) mit Ausstanzungen versehen ist zur Erleichterung des Biegens des Kunststoff-Bauelements.

32. Kunststoff-Bauelement nach einem der vorhergehenden Ansprüche, **dadurch gekennzeichnet,** daß eine Armierungsleiste (7'') diagonal oder zwei Armierungsleisten (7'') x-förmig über die Innenseite des die beiden Seitenschenkel verbindenden Mittelschenkels (5) des Bauelementkörpers (6,6') von dem einen Steg (2,3) zu dem anderen Steg geführt ist.

33. Kunststoff-Bauelement nach einem der Ansprüche 1 bis 31, **dadurch gekennzeichnet,** daß weitere Armierungsleisten (7') vorgesehen sind, welche innerhalb des die beiden Seitenschenkel verbindenden Mittelschenkels (5) des Bauelementkörpers im wesentlichen parallel zu den Stegen (2,3) verlaufen.

34. Kunststoff-Bauelement nach einem der vorhergehenden Ansprüche, **dadurch gekennzeichnet,** daß beide Armierungsleisten (7,7') an der Innenseite des Bauelementkörpers (6,6') angeordnet sind.

## Claims

1. A self-supporting synthetic plastics structural element for fitment on a bearer, particularly on a vehicle body or on a housing part, comprising
- an elongate structural element member (6, 6') of substantially U-shaped cross-section at right-angles to the longitudinal axis, of which the two lateral arms in each case form a web (2, 3) with a marginal portion for attachment on the bearer at a distance (a) between the marginal portion and the bearer or in such a way that the bearer is contacted by the marginal portion,
- at least one reinforcing strip (7, 7') onto which the structural element member (6, 6') is injection moulded,
**characterised in that,**
two separate elongate spaced-apart reinforcing strips (7, 7') are provided which extend parallel with the longitudinal axis and respectively along one of the two marginal portions and in that at least at one end of the structural element there is an end piece which joins the two webs (2, 3) to each other in order to seal off the interior of the structural element, the end piece being injection moulded with no transition directly on the reinforcing strips (7, 7') together with the structural element member.

2. A synthetic plastics structural element according to Claim 1, **characterised in that** the two reinforcing strips (7, 7') are extruded members.

3. A synthetic plastics structural element according to Claim 2, **characterised in that** at least one of the two reinforcing strips (7, 7') is constructed with an integrally extruded softly resilient supporting surface intended to rest on the bearer and which preferably takes the form of a sealing lip (12, 11').

4. A synthetic plastics structural element according to one of Claims 1 to 3, **characterised in that** at least one of the webs (2, 3) is constructed with a contacting softly resilient supporting surface (10') intended to rest on the bearer and which preferably takes the form of a sealing lip (11').

5. A synthetic plastics structural element according to one of the preceding Claims, **characterised in that** at least one of the webs is constructed with a marginal lip (4a, 136) which is only at a minimal distance (a) from the bearer.

6. A synthetic plastics structural element according to one of the preceding Claims, **characterised in that** at least one of the reinforcing strips (7, 7a) has a metal reinforcement (8).

7. A synthetic plastics structural element according to Claim 6, **characterised in that** the metal reinforcement (8) is coated at least on that surface (9) of the metal reinforcement (8) which is towards the interior (51) of the structural element.

8. A synthetic plastics structural element according to Claim 6 or 7, **characterised in that** the metal reinforcement (8) is coated with softly resilient material which is on the surface (11) remote from the interior (51) of the structural element, at least in the region of that edge which is situated closest to the bearer.

9. A synthetic plastics structural element according to one of Claims 6 to 8, **characterised in that** the reinforcing strips (7, 7') are constructed as preferably at least partially synthetic plastics coated metal profiles or metal plates.

10. A synthetic plastics structural element according to one of Claims 1 to 5, **characterised in that** the reinforcing strips (7, 7') are constructed as fibre-reinforced preferably glass fibre reinforced synthetic plastics parts.

11. A synthetic plastics structural element according to one of Claims 1 to 5, **characterised in that** reinforcing strips (7, 7') are constructed as hard synthetic plastics parts.

12. A synthetic plastics structural element according to one of the preceding Claims, **characterised in that** at least portions of the reinforcing strip extend as far as the outer surface (50) of the structural element member (6).

13. A synthetic plastics structural element according to one of Claims 1 to 11, **characterised in that** at least one of the reinforcing strips (7, 7') is constructed as a decorative element, preferably a decorative strip.

14. A synthetic plastics structural element according to Claim 12 or 13, **characterised in that** at least one of the reinforcing strips (7, 7') is in the region of the outside of the synthetic plastics structural element (1, 1') constructed in a different colour and/or surface profiling than are chosen from the adjacent structural element member.

15. A synthetic plastics structural element according to one of Claims 12 to 14, **characterised in that** at least one of the reinforcing strips (7) has a surface of metallic appearance.

16. A synthetic plastics structural element according to one of the preceding Claims, **characterised in** that at least one of the reinforcing strips (7) follows the contours of the structural element member (6, 6') or has a cross-section which diverges therefrom.

17. A synthetic plastics structural element according to one of the preceding Claims, **characterised in that** the synthetic plastics structural element can be fixed directly on the bearer or on a fixing plate (126) which can be mounted on the bearer.

18. A synthetic plastics structural element according to Claim 17, **characterised in that** the reinforcing strips (7, 7') and/or the structural element member is constructed with fixing projections (24, 17, 127, 128) and/or fixing recesses engaged by fixing elements provided on the bearer or on the fixing plate (126) for mounting the synthetic plastics structural element (1, 1') on the bearer.

19. A synthetic plastics structural element according to one of Claims 1 to 18, **characterised by** at least one further reinforcing strip (40, 43) disposed in a central portion of the synthetic plastics structural element (1) at a distance from the marginal areas.

20. A synthetic plastics structural element according to Claim 19, **characterised in that** a further reinforcing strip is constructed as bracing web (43) by which a central portion of the synthetic plastics structural element (1) is braced on the bearer and which is of yielding construction in the bracing direction, preferably via a supporting member (44) of softly resilient synthetic plastics material.

21. A synthetic plastics structural element according to one of Claims 1 to 20, **characterised in that** there is in the marginal portion and parallel therewith an outwardly open groove (120) preferably formed between the bearer and the structural element member (1') which is supported by the reinforcing strip (7') at a distance from the bearer.

22. A synthetic plastics structural element according to one of Claims 1 to 21, **characterised in that** the reinforcing strips (7, 7') are provided with an adhesive coating (100, 138) by which the synthetic plastics structural element (1, 1') can be affixed to the bearer by adhesion.

23. A synthetic plastics structural element according to one of Claims 1 to 22, **characterised in that** at least one separate fixing element (23', 125) is provided for fitting the synthetic plastics structural element on the bearer and which engages at least one of the reinforcing strips (7, 7'), preferably via a catch connection.

24. A synthetic plastics structural element according to one of Claims 1 to 23, **characterised in that** the structural element member (6') is formed by resilient synthetic plastics material.

25. A synthetic plastics structural element according to Claim 24, **characterised in that** the fixing elements (23'; 125) for fitting the synthetic plastics structural element (1') on the bearer impose on the structural element member (6') a predetermined form preferably with a cross-sectional form which varies along a predetermined direction, particularly the longitudinal direction (A) of the elongate synthetic plastics structural element (1') and in that the fixing elements (125) provided on the two marginal portions are provided on one common fixing plate (126) which can in turn be fitted on the bearer.

26. A synthetic plastics structural element according to Claim 25, **characterised in that** the fixing elements (23'; 125) impose upon the synthetic plastics structural element (1') a shape which tapers in one direction.

27. A synthetic plastics structural element according to Claim 25 or 26, **characterised in that** the fixing plate (126) is provided with a coating (138) of adhesive material adapted to be stuck to the bearer.

28. A synthetic plastics structural element according to one of the preceding Claims, **characterised in that** there are integrally formed on that inside face of the reinforcing strip (7) which faces the interior (51) of the structural element, elements (20) which project into the interior (51) and which serve to brace the structural element and which are applied against the bearer via a supporting coating of softly resilient material.

29. A synthetic plastics structural element according to one of the preceding Claims, **characterised in that** on the side of the at least one reinforcing strip (7) which is facing the interior (51) of the structural element and projecting into the interior (51) are elements which serve to fix the structural element (1) and which are elements such as studs, arms (20) or the like which are integrally moulded from hard synthetic plastics material.

30. A synthetic plastics structural element according to one of Claims 6 to 29, **characterised in that** the metal reinforcement (8) is provided with stamped out portions to facilitate bending of the synthetic plastics structural element.

31. A synthetic plastics structural element according to Claim 29, **characterised in that** an arm (20) disposed on the reinforcing strip (7) has stamped out portions to facilitate bending of the synthetic plastics structural element.

32. A synthetic plastics structural element according to one of the preceding Claims, **characterised in that** a reinforcing strip (7'') extends from one web (2, 3) to the other web diagonally or two reinforcing strips (7'') extend from one web (2, 3) to the other web cross-wise over the inside face of the central member (5) of the structural element member (6, 6') which connects the two lateral members.

33. A synthetic plastics structural element according to one of Claims 1 to 31, **characterised in that** further reinforcing strips (7') are provided which extend substantially parallel with the webs (2, 3) within the central member (5) of the structural element member which connects the two lateral members.

34. A synthetic plastics structural element according to one of the preceding Claims, **characterised in that** both reinforcing strips (7, 7') are disposed on the inside face of the structural element member (6, 6').

## Revendications

1. Elément de construction en plastique autoportant pour le montage sur un support, particulièrement sur une carrosserie ou sur un partie de corps, comprenant
un élément de construction formant corps (6, 6') avec une section transversale principalement en forme de U, perpendiculaire à l'axe longitudinal, dont les deux côtés latéraux constituent chacun une aile (2, 3) avec un secteur formant bord, pour être montés sur un support à une distance (a) du secteur formant bord par rapport au support ou avec contact du support par le secteur formant bord,
au moins une baguette d'armature (7, 7'), sur laquelle est rapporté par injection le corps de l'élément de construction (6, 6'),
caractérisé en ce que,
deux baguettes d'armature (7,7') particulières, oblongues, écartées l'une de l'autre, orientées parallèlement à l'axe longitudinal, qui s'étendent chacune le long de l'un des deux secteurs formant bord, sont prévues et
en ce qu'au moins à l'une extrémité de l'élément de construction une pièce d'extrémité reliant les deux ailes (2, 3) l'une avec l'autre pour fermer l'espace intérieur de l'élément de construction, est prévue, laquelle est injectée sans raccord, simultanément au corps de l'élément de construction, sur les baguettes d'armature (7, 7').

2. Elément de construction en plastique selon la revendication 1, caractérisé en ce que les deux baguettes d'armature (7, 7') sont des pièces extrudées.

3. Elément de construction en plastique selon la revendication 2, caractérisé en ce qu'au moins l'une des deux baguettes d'armature (7, 7') est conçue avec un revêtement élastique et souple rapporté par extrusion, pour l'appui sur le support, de préférence de la forme chaque fois d'un bourrelet d'étanchéité (12, 11').

4. Elément de construction en plastique selon l'une quelconque des revendications 1 à 3, caractérisé en ce qu'au moins l'une des ailes (2, 3) est conçue avec une couche de revêtement (10') élastique et souple pour l'appui sur le support, de préférence de la forme d'un bourrelet d'étanchéité (11').

5. Elément de construction en plastique selon l'une quelconque des revendications précédentes, caractérisé en ce qu'au moins l'une des ailes est conçue avec bourrelet formant bord (4a ; 136) présentant un simple écartement étroit (a) par rapport au support.

6. Elément de construction en plastique selon l'une quelconque des revendications précédentes, caractérisé en ce qu'au moins l'une des baguettes d'armature (7, 7') présente une armature métallique (8).

7. Elément de construction en plastique selon la revendication 6, caractérisé en ce que l'armature métallique (8) est revêtue au moins sur la surface (9) de l'armature métallique (8) orientée vers l'espace intérieur (51) de l'élément de construction.

8. Elément de construction en plastique selon l'une quelconque des revendications 6 ou 7, caractérisé en ce que l'armature métallique (8) est revêtue d'un matériau élastique et souple, sur la surface (11) de l'armature métallique, opposée à l'espace intérieur (51) de l'élément de construction, au moins dans le secteur du bord le plus proche du support.

9. Elément de construction en plastique selon l'une quelconque des revendications 6 à 8, caractérisé en ce que les baguettes d'armature (7, 7') sont conçues comme des profilés métalliques de préférence revêtus au moins partiellement de plastique ou comme des tôles.

10. Elément de construction en plastique selon l'une quelconque des revendications 1 à 5, caractérisé en ce que les baguettes d'armature (7, 7') sont conçues comme des pièces en plastique renforcées de fibres, de préférence renforcées de fibres de verre.

11. Elément de construction en plastique selon l'une quelconque des revendications 1 à 5, caractérisé en ce que les baguettes d'armature (7, 7') sont conçues comme des pièces en plastique dur.

12. Elément de construction en plastique selon l'une quelconque des revendications précédentes, caractérisé en ce que la baguette d'armature se prolonge au moins par secteurs, jusqu'à la surface extérieure (50) du corps d'élément de construction (6).

13. Elément de construction en plastique selon l'une quelconque des revendications 1 à 11, caractérisé en ce qu'au moins l'une des baguettes d'armature (7, 7') est conçue comme élément décoratif de préférence comme bande décorative.

14. Elément de construction en plastique selon l'une quelconque des revendications 12 ou 13, caractérisé en ce qu'au moins l'une des baguettes d'armature (7, 7') est conçue dans le secteur de la face extérieure de l'élément de construction en plastique (1, 1') avec une coloration et/ou un profil de surface autres que le corps de l'élément de construction s'y raccordant.

15. Elément de construction en plastique selon l'une quelconque des revendications 12 à 14, caractérisé en ce qu'au moins l'une des baguettes d'armature (7) présente une surface d'aspect métallique.

16. Elément de construction en plastique selon l'une quelconque des revendications précédentes, caractérisé en ce qu'au moins une baguette d'armature (7) suit le profil du corps d'élément de construction (6, 6') ou présente une section transversale s'écartant de celui-ci.

17. Elément de construction en plastique selon l'une quelconque des revendications précédentes, caractérisé en ce que l'élément de construction en plastique peut être fixé directement sur le support ou sur une plaque de fixation (126) pouvant être montée sur le support.

18. Elément de construction en plastique selon la revendication 17, caractérisé en ce que les baguettes d'armature (7, 7') et/ou le corps de l'élément de construction sont conçus avec des saillies de fixation (24, 17, 127, 128) et/ou des évidements de fixation, sur lesquels des éléments de fixation montés sur le support ou sur la plaque de fixation (126) viennent en prise, pour le montage l'élément de construction en plastique (1, 1') sur le support.

19. Elément de construction en plastique selon l'une quelconque des revendications 1 à 18, caractérisé par au moins une autre baguette d'armature (40 ; 43), qui est disposée dans le secteur central de l'élément de construction en plastique (1), à distance par rapport aux secteurs formant bord.

20. Elément de construction en plastique selon la revendication 19, caractérisé en ce que l'autre baguette d'armature est conçue comme une aile de support (43), avec laquelle un secteur central de l'élément de construction en plastique (1) prend appui sur le support et laquelle est conçue de manière souple flexible dans le sens de l'appui, de préférence par l'intermédiaire d'un revêtement (44) en plastique élastique et souple.

21. Elément de construction en plastique selon l'une quelconque des revendications 1 à 20, caractérisé en ce que, dans le secteur formant bord, une rainure (120) ouverte vers l'extérieur, parallèle au secteur formant bord, est prévue, laquelle est de préférence constituée entre le support et le corps de l'élément de construction (1) maintenu à distance du support par la baguette d'armature (7').

22. Elément de construction en plastique selon l'une quelconque des revendications 1 à 21, caractérisé en ce que les baguettes d'armature (7 ; 7') sont pourvues d'une couche adhésive (100 ; 138) pour le collage de l'élément de construction en plastique (1 ; 1') sur le support.

23. Elément de construction en plastique selon l'une quelconque des revendications 1 à 22, caractérisé en ce qu'au moins un élément de fixation particulier (23' ; 125) est prévu pour le montage de l'élément de construction en plastique sur le support, lequel vient en prise sur au moins l'une des baguettes d'armature (7, 7'), de préférence par un assemblage par encliquetage.

24. Elément de construction en plastique selon l'une quelconque des revendications 1 à 23, caractérisé en ce que le corps de l'élément de construction (6') est constitué de plastique souple.

25. Elément de construction en plastique selon la revendication 24, caractérisé en ce que les éléments de fixation (23' ; 125) destinés au montage de l'élément de construction en plastique (1) sur le support, impriment au corps de l'élément de construction (6) une forme donnée, de préférence avec une forme de section se modifiant le long d'un sens donné, particulièrement le sens longitudinal (A) de l'élément de construction en plastique (1) oblong, et en ce que les éléments de fixation (125) sont prévus sur les deux secteurs formant bord sur une plaque de fixation (126) commune, qui à son tour peut être fixée sur le support.

26. Elément de construction en plastique selon la revendication 25, caractérisé en ce que les éléments de fixation (23' ; 125) impriment à l'élément de construction en plastique (1) une forme se rétrécissant dans un sens.

27. Elément de construction en plastique selon l'une quelconque des revendications 25 ou 26, caractérisé en ce que la plaque de fixation (126) est pourvue d'une couche adhésive (138) pour le collage sur le support.

28. Elément de construction en plastique selon l'une quelconque des revendications précédentes, caractérisé en ce que des éléments (20), servant au support de l'élément de construction, sont formés sur la face intérieure de la baguette d'armature (7) orientée vers l'espace intérieur (51) de l'élément de construction, s'avançant dans l'espace intérieur, qui reposent sur le support par l'intermédiaire d'une couche de revêtement en plastique élastique et souple.

29. Elément de construction en plastique selon l'une quelconque des revendications précédentes, caractérisé en ce que des éléments, s'avançant dans l'espace intérieur (51), servant à la fixation de l'élément de construction (1), tels que des nopes, des côtés (20) ou similaires, sont formés en plastique dur sur la face intérieure d'au moins l'une des baguettes d'armature (7) orientée vers l'espace intérieur (51) de l'élément de construction.

30. Elément de construction en plastique selon l'une quelconque des revendications 6 à 29, caractérisé en ce que l'armature métallique (8) est pourvue de découpes à la matrice, pour faciliter le pliage de l'élément de construction en plastique.

31. Elément de construction en plastique selon la revendication 29, caractérisé en ce qu'un côté (20) disposé sur la baguette d'armature (7) est pourvu de découpes à la matrice, pour faciliter le pliage de l'élément de construction en plastique.

32. Elément de construction en plastique selon l'une quelconque des revendications précédentes, caractérisé en ce qu'une baguette d'armature (7'') diagonale ou deux baguettes d'armature (7'') en forme de x sont orientées sur la face intérieure du côté central (5) reliant les deux côté latéraux du corps de l'élément de construction (6, 6') d'un côté (2,3) à l'autre côté.

33. Elément de construction en plastique selon l'une quelconque des revendications 1 à 31, caractérisé en ce que d'autres baguettés d'armature (7') sont prévues, lesquelles sont essentiellement parallèles aux ailes (2, 3) à l'intérieur du côté central (5) du corps de l'élément de construction reliant les deux côtés latéraux.

34. Elément de construction en plastique selon l'une quelconque des revendications précédentes, caractérisé en ce que les deux baguettes d'armature (7, 7') sont disposées sur la face intérieure du corps de l'élément de construction (6, 6').
